# EUROPEAN PATENT SPECIFICATION

(11) **EP 1 041 823 B1**
(45) Date of publication and mention of the grant of the patent: **08.03.2006**
(21) Application number: 00302721.6
(22) Date of filing: 31.03.2000
(51) Int. Cl.: H04N 7/167, H04N 7/173

(54) **Content distribution apparatus, content receiving apparatus, and content distribution method**
Informationsverteilungsvorrichtung, Informationsempfangsgerät und Informationsverteilungsverfahren
Appareil de distribution d'information, appareil de réception d'informations et méthode de distribution d'informations

(30) Priority: 31.03.1999 JP 9391699
(43) Date of publication of application: 04.10.2000
(60) Divisional application: 06000449.6
(73) Proprietor: KABUSHIKI KAISHA TOSHIBA, Kawasaki-shi, Kanagawa-ken 210-8572 (JP)
(72) Inventor: Saito, Takeshi, Intellectual Property Division, Tokyo (JP); Kato, Taku, Intellectual Property Division, Tokyo (JP); Tomoda, Ichiro c/o Intellectual Property Division, Tokyo (JP); Takabatake, Yoshiaki, Intell. Prop. Div., Tokyo (JP); Ami, Junko, Intellectual Property Division, Tokyo (JP)
(74) Representative: Midgley, Jonathan Lee

(56) References cited:
- EP-A- 0 393 806
- EP-A- 0 910 003
- US-A- 5 841 864
- US-A- 5 870 474

## Description

### BACKGROUND OF THE INVENTION

### 1. Field of the Invention

The present invention relates to a content distribution apparatus, a content receiving apparatus, and a content distribution method. More particularly, it relates to technology in real-time distribution of content via an open network such as the Internet, whereby protection is provided against content theft by third parties and unauthorized copying of content by a content recipient, thereby enabling transmission and reception of content data while considering copyright protection.

### 2. Description of the Related Art

In recent years, the digitization of the home sound and image (audio/visual; hereinafter abbreviated AV) environment, as exemplified by the start of digital broadcasts and the sales of digital AV equipment has gained much attention. Digital AV data enables diverse types of compression, is amenable to processing as multimedia data, tolerates unlimited playback without deterioration, and has other features which are expected to result in an expansion in its application in the future.

On the other hand, digital AV data technology is accompanied by the problem of easy unauthorized copying of content. More specifically, any type of digital content can in principle be used to create a copy identical to the original and indefinitely durable , by means of bit copying, in the process of unauthorized content copying.

A variety of technologies are being studied for the purpose of preventing unauthorized copying. One of these is the 1394CP Content Protection System Specification being studied by the CPTWG (Content Protection Technical Working Group). In this technology, an authentication procedure is performed beforehand between sending and receiving nodes for content (such as MPEG data) to be transferred between nodes connected by the IEEE 1394 bus, to enable shared use of an encryption key (content key). Thereafter, this encryption key is used to encrypt the content and then encrypted content is transferred, and it is not possible for nodes other than the nodes that performed the authentication procedure to decrypt the content. By doing this, because, a node other than the authenticated nodes (that is, a third party node) does not know the encryption key, even if the node were able to capture the transferred data (that is, the encrypted content data), it would not be able to decrypt it. Nodes that can participate in this authentication procedure are limited to nodes that receive permission to do so by an authentication organisation beforehand, thereby preventing an unauthorised node from obtaining the encryption key, and thus preventing unauthorised copying of content.

The distribution of digital content is not, of course, limited to transfer via the IEEE 1394 bus, and general networks are expected to be used. The Internet is a strong candidate for building a technology infrastructure that is not wedded to public networks or physical/link networks.

In conventional content distribution as practiced, however, digital content on the Internet (and in particular digital AV streams) was mainly transferred in its raw form by the RTP (Real-time Transport Protocol), without copyright protection provided by prevention of third-party theft and unauthorised copying by a recipient.

European Patent Application number 0 910 003 describes an authentication process between a computer and a source, such as a DVD, where a licence key is formed on an ID unique to the computer and a service key corresponding to the information to be provided.

United States Patent number 5,870,474 describes an interactive information services system for providing at least one of video, audio and data (program) requested by a customer from a service provider and for transmitting the requested program bearing the packets to a set top unit associated with the customer, apparatus positioned between the service provider and the set top unit associated with the customer and for ensuring that only the customer has access to the program.

### SUMMARY OF THE INVENTION

The invention provides content information distribution apparatus, content information receiving apparatus, a method of distributing encrypted content information, a method of receiving encrypted content information, and programs stored on media for performing these methods, as defined respectively in Claims 1, 11, 15, 16, 17 and 18.

Accordingly, the present invention, in consideration of the above-noted situation, can provide content distribution apparatus, a content receiving apparatus, and a content distribution method, which provide protection from copying when digital content is transferred on the Internet by real-time streaming.

A feature of the present invention is that information with regard to encryption and encoding etc. required to provide copy protection for digital content can be efficiently appended as various headers to the content, making use of the characteristics of the Internet.

Other features and advantages of the present invention will become apparent from the following description taken in conjunction with the accompanying drawings.

### BRIEF DESCRIPTION OF THE DRAWINGS

The accompanying drawings, which are incorporated in and constitute a part of the specification, illustrate presently preferred embodiments of the invention, and together with the general description given above and the detailed description of the preferred embodiments given below, serve to explain the principles of the invention, wherein:
Fig. 1 is a drawing showing an example of a configuration of a network associated with the first embodiment to the sixth embodiment of the present invention;
Fig. 2 is a diagram showing an example of a sequence of content distribution in the first embodiment to the sixth embodiment of the present invention;
Fig. 3 is a block diagram showing an example of the configuration of an MPEG distribution server according to the first embodiment of the present invention;
Fig. 4 is a flowchart showing the procedure for content distribution processing in an MPEG distribution server according to the first embodiment of the present invention;
Fig. 5 is a drawing showing a first example of a format of a code expansion header;
Fig. 6 is a drawing showing a first example of the format of a header given by an RTP processor;
Fig. 7 is a drawing showing a first example of a format of a transferred IP packet;
Fig. 8 is a block diagram showing an example of the configuration of a receiving apparatus according to the first embodiment of the present invention;
Fig. 9 is a flowchart showing the procedure for content receiving processing in a receiving apparatus according to the first embodiment of the present invention;
Fig. 10 is a block diagram showing an example of the configuration of an MPEG distribution server according to the second, third, or fifth embodiment of the present invention;
Fig. 11 is a drawing showing a second example of a format of a header given by an RTP processor;
Fig. 12 is a drawing showing the second example of the format of a transferred IP packet;
Fig. 13 is a flowchart showing the procedure for content distribution processing in an MPEG distribution server according to the second embodiment of the present invention;
Fig. 14 is a block diagram showing an example of the configuration of a receiving apparatus according to the second, third, or fifth embodiment of the present invention;
Fig. 15 is a flowchart showing the procedure for content receiving processing in a receiving apparatus according to the second embodiment of the present invention;
Fig. 16 is a drawing showing a third example of a format of a header given by an RTP processor;
Fig. 17 is a drawing showing a third example of a format of a transferred IP packet;
Fig. 18 is a block diagram showing an example of the configuration of an MPEG distribution server according to the fourth or sixth embodiment of the present invention;
Fig. 19 is a drawing showing a fourth example of a format of a header given by an RTP processor;
Fig. 20 is a drawing showing a fourth example of a format of a transferred IP packet;
Fig. 21 is a flowchart showing a procedure for content distribution processing in an MPEG distribution server according to the fourth embodiment of the present invention;
Fig. 22 is a block diagram showing an example of the configuration of a receiving apparatus according to the fourth or sixth embodiment of the present invention;
Fig. 23 is a flowchart showing a procedure for content receiving processing in a receiving apparatus according to the fourth embodiment of the present invention;
Fig. 24 is a drawing showing a fifth example of a format of a header given by an RTP processor;
Fig. 25 is a drawing showing a second example of a format of a code expansion header;
Fig. 26 is a drawing showing a fifth example of a format of a transferred IP packet;
Fig. 27 is a drawing showing a sixth example of a format of a header given by an RTP processor;
Fig. 28 is a drawing showing a sixth example of a format of a transferred IP packet;
Fig. 29 is a drawing showing an example of the configuration of a network according to the seventh embodiment of the present invention;
Fig. 30 is a drawing showing an example of the sequence of content distribution according to the seventh embodiment of the present invention;
Fig. 31 is a block diagram showing an example of the configuration of an MPEG distribution server according to the seventh embodiment of the present invention;
Fig. 32 is a drawing showing a seventh example of a format of a transferred IP packet;
Fig. 33 is a drawing showing a seventh example of a format of a header given by an RPT processor;
Fig. 34 is a block diagram showing an example of the configuration of a receiving apparatus according to the seventh embodiment of the present invention; and
Fig. 35 is a drawing showing an example of the sequence of content distribution according to the eighth embodiment of the present invention.

### DESCRIPTION OF THE PREFERRED EMBODIMENTS

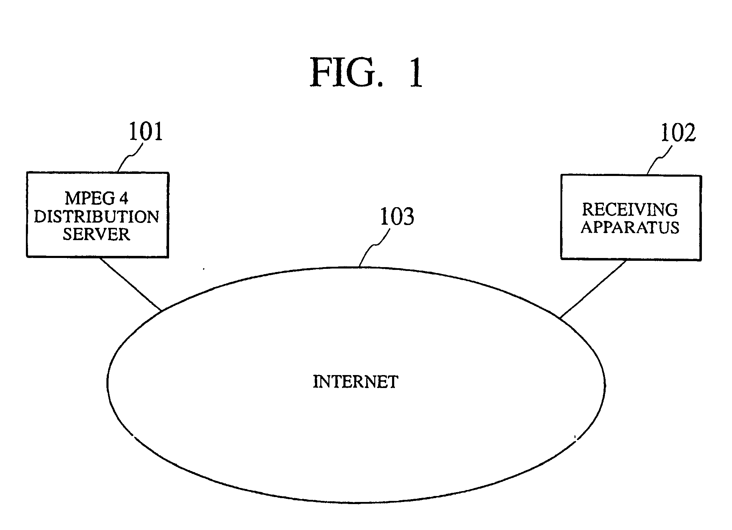

Embodiments of a content distribution apparatus, a content receiving apparatus, and a content distribution method according to the present invention are described in detail below, with reference to Fig. 1 through Fig. 35.

### First Embodiment

The first embodiment of a content distribution apparatus, a content receiving apparatus, and a content distribution method according to the present invention is described in detail below, with reference to Fig. 1 through Fig. 9.

Fig. 1 shows an example of the configuration of a content distribution system according to this embodiment of the present invention. In Fig. 1, an MPEG4 distribution server 101 and a receiving apparatus 102 according to this embodiment are connected to the Internet 103, MPEG4 AV stream data being securely communicated between the MPEG4 distribution server 101 and the receiving apparatus 102, via the Internet 103. Of course, other MPEG4 distribution servers and receiving apparatuses and other types of equipment can additionally be connected to the Internet 103.

In the description of embodiments to follow, while the type of data is MPEG (Motion Picture Experts Group) 4, it will be understood that the present invention is not restricted to application to this type of data, and can be applied to other data types as well.

The MPEG4 distribution server 101 performs distribution of MPEG4 data to the receiving apparatus 102. MPEG4 data is distributed not in the form of file transfer, but rather as data stream. The MPEG4 data that is to be copyright protected is distributed in encrypted form. When doing this, an authentication procedure or key exchange procedure is performed between the MPEG4 distribution server 101 and the receiving apparatus 102.

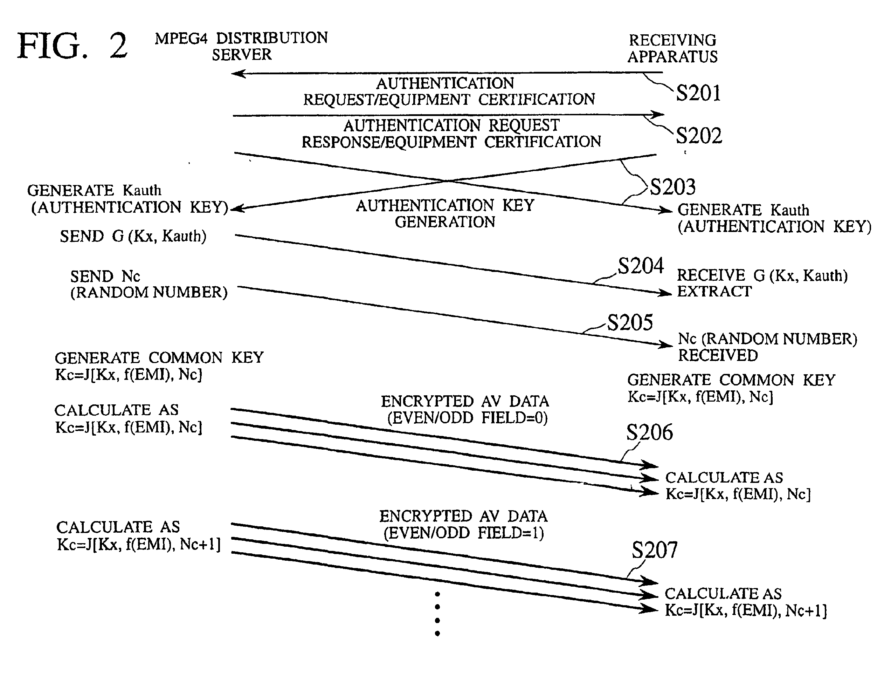

The sequence of this procedure is illustrated by example in Fig. 2.

Fig. 2 shows the sequence of content layer encryption and authentication, and it should be noted that security in layers such as the IP layer and transport layer and authentication procedures in those layers have been omitted from this drawing, as has the procedure for assessing charges at the content layer, which is performed earlier (although there are cases in which charge assessment and authentication/encryption at other layers are not performed).

Consider the case in which the receiving apparatus 102 makes a request to the MPEG4 distribution server 101 for distribution. In this case, the first authentication request is sent from the receiving apparatus 102 (S201). In this authentication request, there can also be a simultaneous exchange of a certificate (equipment certification) that is received by the apparatus (receiving apparatus 102) from a certification organization, the certificate certifying that the equipment is capable of performing transfer of copyright protected content.

The "equipment ID" that is used in the equipment certification can be an IP address, and in the case in which the IP address is given by a DHCP (Dynamic Host Configuration Protocol) server, there is a possibility that this value will differ each time the apparatus is booted. Because of this situation, it is possible to use as the "equipment ID" for equipment certification the MAC address of the equipment, or the EUI64 address, or an address created by adding to these address a partial module number. It is further possible to use as the "equipment ID" the CPU ID number of the apparatus, or the MPEG4 decoder ID number or the like, which (ideally) is a value that is unique worldwide (or that can be expected to be unique or almost unique within the region).

An MPEG4 distribution server 101 that receives a message from the receiving apparatus 101, performs a response to the authentication request and performs exchange of a certificate (equipment certification) (S202).

Next, the MPEG4 distribution server 101 and the receiving apparatus 102 perform a process that generates an authentication key, for the purpose of generating a common authentication key (S203). Details of this procedure can be the same as, for example, the IEEE 1394 copy protection key generation process. When this process is completed, the MPEG4 distribution server 101 and the receiving apparatus 102 can possess a common authentication key Kauth, which is not knowable to a third party.

Next, the MPEG4 distribution server 101 sends G(Kx, Kauth) which is generated by certain function G with the use of an exchange key Kx, the authentication key Kauth as arguments, and a random number Nc to the receiving apparatus 102 (S204, S205). At the receiving apparatus 102, reverse function of G(Kx, Kauth) is calculated so as to extract the exchange key Kx.

At this point in time, the MPEG4 distribution server 101 and the receiving apparatus 102 share the three values of authentication key Kauth, exchange key Kx, and the random number Nc.

At this point, the encryption key (content key) Kc, which is the encryption key for encrypting the MPEG4 data to be sent by the MPEG4 distribution server 101 and for the receiving apparatus 102 to decrypt the received encrypted MPEG4 data (that is the shared key), is calculated in the MPEG4 distribution server 101 and the receiving apparatus 102, respectively, by using one and the same pre-established function J, as a function of part of the above-noted value. For example, the calculation is made as Kc=J[Kx, f(EMI), Nc], in which EMI indicates the copy attribute for the data (content), which expresses such attributes as the data being copiable without limit, the data being copiable only 1 time, the data being copiable only 2 times, the data being uncopiable under any conditions, or the data being already copied and therefore not further copiable. f(EMI) is obtained by transforming the attribute value of EMI with the use of certain specific function f. These functions J and f can also be kept maintained as secret with respect to the outside.

After the encryption key (content key) Kc is generated, the MPEG4 distribution server 101 encrypts the content (MPEG4 data) using the encryption key Kc, and sends the encrypted content to the Internet (S206, S207, ...).

As will be described below, because the encrypted content is in the form of AV stream data transferred in real time over the Internet, in the first embodiment of the present invention RTP (Real-time Transport Protocol) is used as the transport protocol.

It is also possible to make the encryption key Kc vary with time (that is, have its value change with the passage of time).

For example, if the elapse of a prescribed amount of time (which can be a fixed amount of time, or a variable amount of time) from the previous change is recognized, the value of the variable Nc is incremented, and the above-noted function J is used to calculate the encryption key Kc. When this is done, the timing of updating of the encryption key Kc value (or the data at the point at which the encryption key Kc is to be updated) must be recognized synchronously at the sending and receiving sides. For this reason, regions such as Even/Odd field is provided in the transferred MPEG4 data (AV data), and the point at which there is a change in the field is established as the point at which the value of the variable Nc, that is, the value of the encryption key Kc is changed, so that data after the field change point is encrypted with the updated encryption key Kc.

The MPEG4 distribution server 101 monitors the above-noted elapse of time and, when the timing for the updating of the encryption key Kc is detected, the value of the variable Nc is incremented and the encryption key Kc is calculated again, the recalculated value of the encryption key Kc being used to encrypt the MPEG4 data that is to be sent, the Even/Odd field value being incremented, and transmission being performed. Thereafter, until the timing for the next updating, this updated encryption key Kc is used to perform encryption.

At the receiving apparatus 102, the received Even/Odd field value is monitored, comparing the value with the immediately previously received value and, if the value is detected as being different from the immediately previously received value, the value of the variable Nc is incremented, and the value of encryption key Kc is recalculated, the encryption key Kc after this recalculation being used in decrypting received encrypted data. Thereafter, until the next change in the Even/Odd field value is detected, this value of encryption key Kc is used to perform decryption.

In this manner, encrypted MPEG4 data is transferred between the MPEG4 distribution server 101 and the receiving apparatus 102.

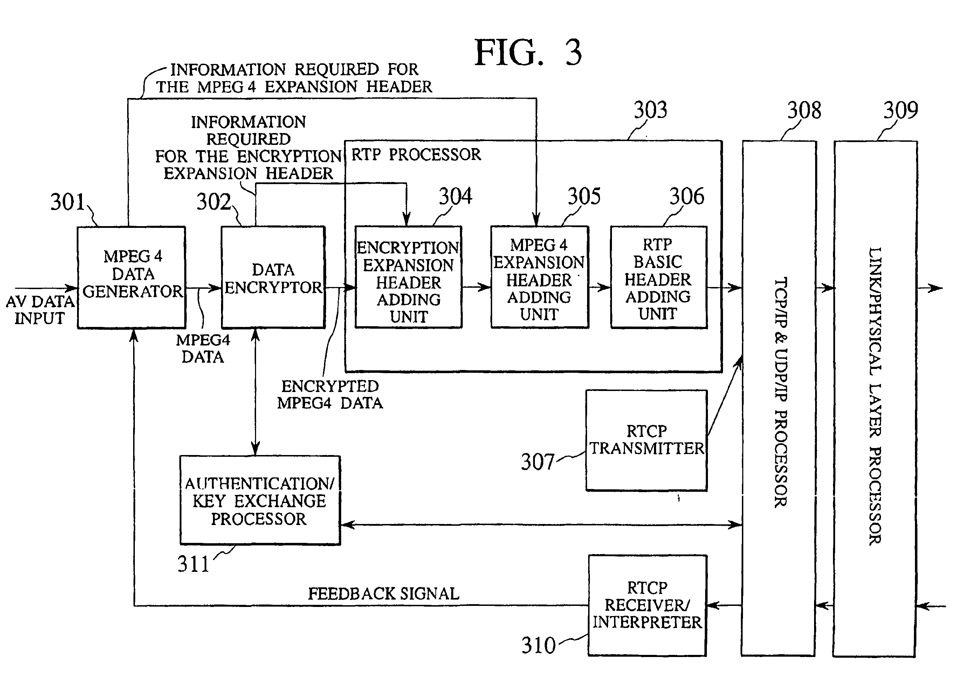

Fig. 3 shows an example of the internal configuration of the MPEG4 distribution server 101.

As shown in Fig. 3, the MPEG4 distribution server 101 of this embodiment comprises a MPEG data generator 301, a data encryptor 302, an RTP processor 303, an RTCP transmitter 307, a TCP/IP and UDP/IP processor 308, a link/physical layer processor 309, an RCTP receiver/interpreter 310, and an authentication/key exchange processor 311. The RTP processor 303 includes an encryption expansion header adding unit 304, an MPEG4 expansion header adding unit 305, and an RTP basic header adding unit 306, and performs processing related to the RTP.

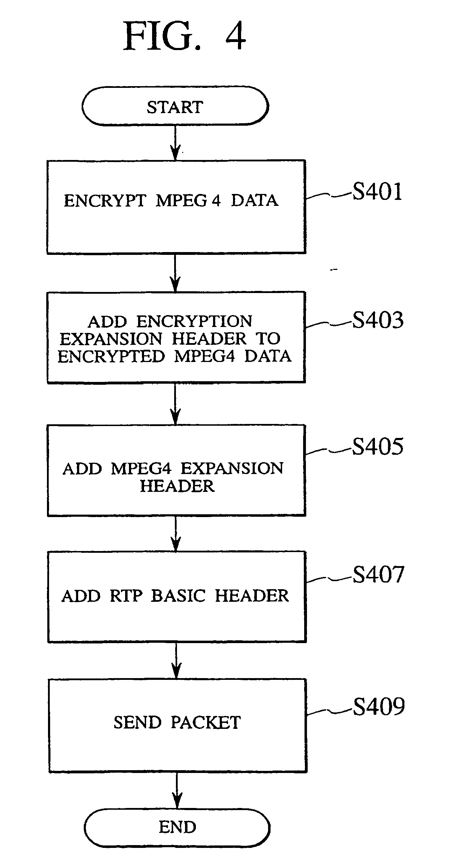

Next, the procedure for processing the content distribution in the MPEG4 distribution server 101 according to the first embodiment is described below, with reference to Fig. 4.

Processing related to authentication and encryption in the sequence of Fig. 2 (processing from S201 to S205) and processing related to the above-described updating of the encryption key is performed by the authentication/key exchange processor 311. This processing can be performed before or after the sending of content to the receiving apparatus 102.

The inputted AV information (for example, an analog signal) is compressed to MPEG4 data by the MPEG4 data generator 301.

When this is done, if MPEG attribute information such as the location of I pictures (intra-coded pictures) and the encoding rate are sent simultaneously with the MPEG4 data to notify the receiving side, playback (decoding) at the receiving side is facilitated. In particular on the Internet, where such things as discarded and delayed packets and a change in the sequence of arrival of packets can occur, this attribute information is essential to achieve high-quality playback at the receiving side. For example, in the case of MPEG4 in the first embodiment, information about, for example, the VOP header corresponds to these attributes. Cases can be envisioned in which information with regard to the MPEG4 system, for example transmission of synchronization information at a sync layer, information for multiplexing when sending a plurality of MPEG4 streams in multiplexed format, or information with regard to initial and latest values of object descriptors is required. For this reason, when sending AV data by RTP, the above-noted information is coded into the RTP expansion header or into the payload header of the RTP payload (that is, user area), so that the MPEG attribute information is sent along with the AV data.

In the first embodiment, this MPEG attribute information is sent in the form of an RTP expansion header. That is, it is sent as an RTP expansion header of the ID type of MPEG4 expansion header. For this reason, required information with regard to encoding is sent from the MPEG4 data generator 301 as notification to the MPEG4 expansion header adding unit 305.

Next, the MPEG4 data outputted from the MPEG4 data generator 301 is encrypted by the data encryptor 302 (step S401 in Fig. 4). When this is done, the encryption key may be the above-noted time-variant encryption key Kc. With regard to the encryption processing as well, a variety of attribute information can be envisioned. In the first embodiment, an RTP expansion header whose ID type indicates the encryption expansion header is added by the encryption expansion header adding unit 304 (step S403). For this reason, information required for the generation of an encryption expansion header is sent as notification from the data encrypter 302 to the encryption expansion header adding unit 304.

In order to perform the above-noted encryption processing, at the authentication/key exchange processor 321 when the timing for updating the encryption key Kc is reached, Nc is incremented and the above-described function J is used to generate a new encryption key Kc which is passed to the data encrypter 302. Along with this, the value of Even/Odd field is incremented and passed to the data encrypter 302. The value Even/Odd field is passed, as noted above, from the data encrypter 302 to the encryption expansion header adding unit 304.

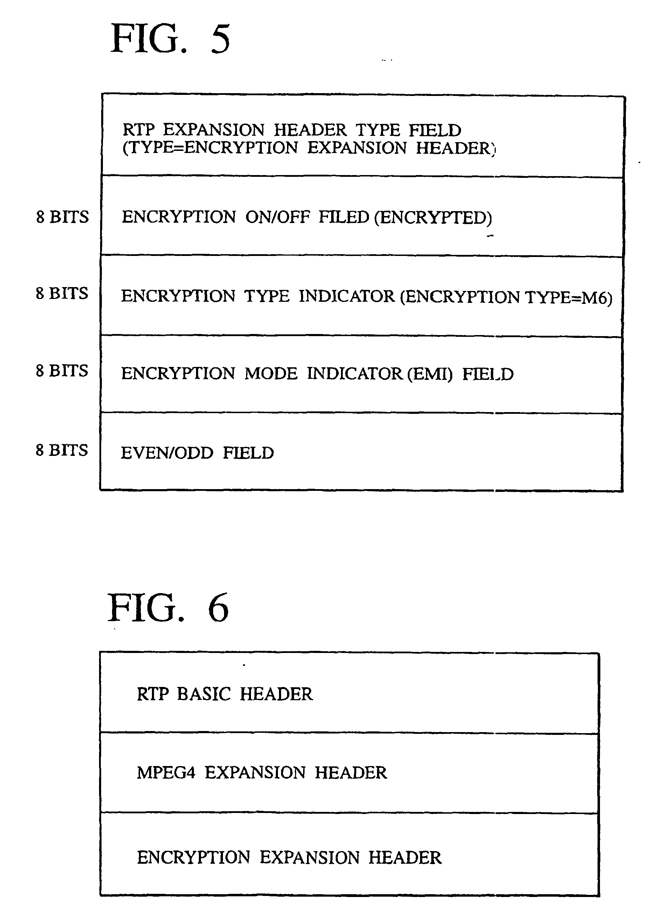

Fig. 5 shows an example of an encryption expansion header. The encryption expansion header has a expansion header type field, a encryption on/off field, encryption type indication field, an encryption mode indicator (EMI) field, and an Even/Odd field.

The expansion header type field is for coding information that indicates the type of corresponding expansion header. In this case, information that indicates the encryption expansion header is coded into the expansion header type field.

The encryption on/off field is a field for coding information indicating whether or not the data transferred in the corresponding RTP packet is encrypted.

The encryption type indicator field is a field for coding the type of encryption used with respect to data transferred in an RTP packet. For example, in Fig. 5, information is described that indicates "an M6 encryption type".

The encryption mode indicator (EMI) field is a field for coding the above-noted copy attribute value EMI.

The Even/Odd field, as noted above, is a field for notifying the receiving side from the sending side of the timing of updating of the encryption key.

Although in the example shown each field has 8 bits, there is no restriction to the number of bits, and the number of bits can be appropriately established as desired.

When AV data is encrypted and sent to the receiving side, if it is desired to perform such trick play as fast-forwarding, or sending of partial static images, there are cases in which processing at the receiving side becomes difficult. This is because it is difficult to perform a task such as sending just a part of an encrypted AV data stream (for example, because the Nc value would not be incremented but would rather skip over a number of values). For this reason, in certain cases it is desirable to send AV data to the receiving side without encrypting it. In such cases, it is necessary to notify the receiving side by information as to whether or not the AV data has been encrypted. The above-noted encryption on/off field is provided for such purposes.

Additionally, on the Internet there is the possibility that one stream will use one encryption type and another stream use a different encryption type. In such cases, if there is a field that indicates to what type of encryption the AV data has been subjected, the receiving side can examine this field so as to select a proper decryption engine for describing the data. The above-noted encryption type indicator field is provided for this type of purpose.

As shown in Fig. 5, the encryption mode indicator (EMI) field is 8 bits rather than the 2 bits that are used in the case of IEEE 1394. This is in order to establish the freedom to select a value of N used to give notification of the specification of the number of copies N of the AV data that are to be permitted, and for cases in which a special type of copying (for example, permitting copying only when some condition is satisfied), in which case this field must be able to take a larger number of values than would be possible with 2 bits.

As shown in Fig. 5, in the Even/Odd field, in contrast to the 1 bit used in IEEE 1394, there are 8 bits provided. This is because 1 bit would not allow enough information for the Internet, in which as noted above it is possible to have discarded or delayed packets and an altered sequence of packet arrivals. Thus, for example, on the Internet a case can be envisioned in which, with the Even/Odd bit 1 as shown at step S207, all the packets are discarded. In this case, if the Even/Odd field were to be just 1 bit, the Even/Odd field would return to 0 at the next packet, so that as seen from the receiving side the condition in which the Even/Odd bit is 0 is continuing (that is, not changing). Thus, although Nc should actually be incremented by 2, if the Even/Odd bit value is not changed, the Nc value is not incremented, thereby preventing generation of the correct encryption key. Because of this situation, more than 2 bits, for example 8 bits, are provided in the Even/Odd field, so that even if packet discarding and delay, or resequencing of packet arrival occurs, as it can on the Internet, it is possible to perform appropriate processing on the receiving side.

In the first embodiment of the present invention, data encryption is performed only with respect to MPEG4 data itself, and not with respect to the MPEG4 expansion header. Because the MPEG4 expansion header is not content that need to be copyright protected, but is rather used on the receiving side before the MPEG4 data itself is used, enabling it to omitted from the data that is encrypted.

In the RTP processor 303, an encryption expansion header is added to the MPEG4 data by the encryption expansion header adding unit 304, an MPEG4 expansion header is added to the MPEG4 data by the MPEG4 expansion header adding unit 305 (step S405 in Fig. 4), and an RTP basic header is added to the MPEG4 data by the RTP basic header adding unit 306 (step S407), the ultimate result being the addition of the RTP header such as shown in Fig. 6. The encryption expansion header is generated based on information from the data encrypter 302, and the MPEG4 expansion header is generated based on information from the MPEG4 data generator 301. The RTP header has elements that are basic parameters required for AV data transfer via the Internet, such as a time stamp and a sequence number (for details, refer to RFC 1889).

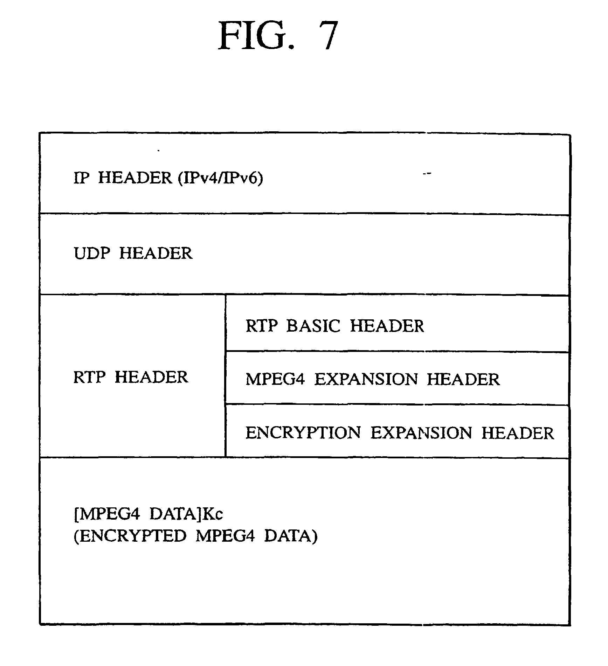

Encrypted MPEG4 data to which the RTP header has been added is sent to the Internet 103 by the TCP/IP and UDP/IP processor 308 as an IP packet as shown in Fig. 7, via the link/physical layer processor 309.

Next, the configuration of the receiving apparatus 102 and the procedure for processing therein will be described.

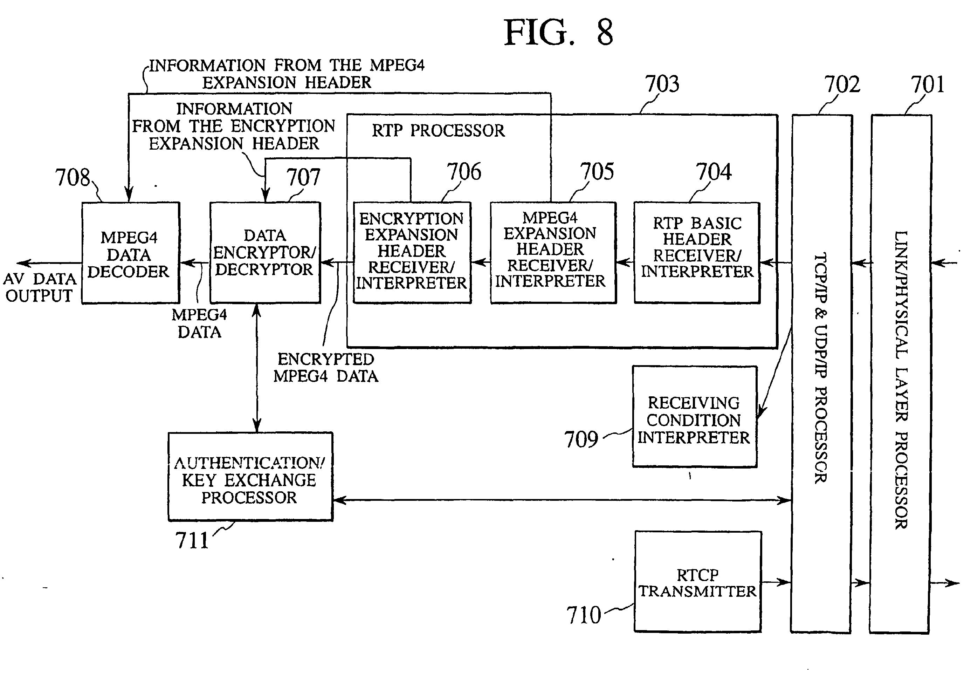

Fig. 8 shows the internal configuration of the receiving apparatus 102.

As shown in Fig. 8, the receiving apparatus 102 according to the first embodiment comprises a link/physical layer processor 701, a TCP/IP and UDP/IP processor 702, an RTP processor 703, a data encryptor/decryptor 707, an MPEG4 data decoder 708, a receiving condition interpreter 709, an RTCP transmitter 710, and an authentication/key exchange processor 711. The RTP processor 703 includes an RTP basic header receiver/interpreter 704, an MPEG4 expansion header receiver/interpreter 705, and an encryption expansion header receiver/interpreter 706, and performs processing related to the RTP.

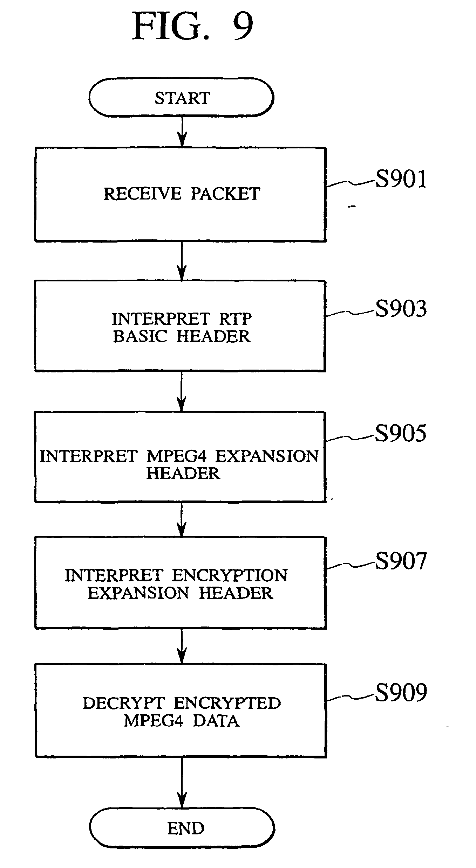

Fig. 9 shows a procedure for encrypted content receiving processing performed by the receiving apparatus 102 of the first embodiment of the present invention.

Processing related to authentication and encryption of the sequence of Fig. 2 (processing from S201 to S205) and processing related to encryption key updating is performed by the authentication/key exchange processor 711.

The receiving apparatus 102 basically performs processing in a sequence that is the reverse of the processing performed by the MPEG4 distribution server 101.

Specifically, MPEG4 data (encrypted data with an added RTP header) transferred via the Internet 103 passes through the link/physical layer processor 701 to the TCP/IP and UDP/IP processor 702 and is then inputted to the RTP processor 703 (step S901 in Fig. 9).

At the RTP processor 703, the RTP basic header is interpreted by the RTP basic header receiver/interpreter 704 (step S903 in Fig. 9), the MPEG4 expansion header is interpreted by the MPEG4 expansion header receiver/interpreter 705 (Step S905), and the encryption expansion header is interpreted by the encryption expansion header receiver/interpreter 706 (Step S907). Information required for decoding is sent as notification from the MPEG4 expansion header receiver/interpreter 705 to the MPEG4 data decoder 708, and information required for decryption is sent from the encryption expansion header receiver/interpreter 706 to the data encyptor/decryptor 707.

The encrypted data stored in the RTP payload is passed from the RTP processor 703 to the data encryptor/decryptor 707. The data encryptor/decryptor 707 performs decryption of data, based on information from the encryption expansion header receiver/interpreter 706.

The encryption key used in decryption is the above-described time-variant encryption key Kc. That is, the data encryptor/decryptor 707 refers to a value of the encryption on/off field of the encryption expansion header sent as notification from the encryption expansion receiver/interpreter 706, so as to learn that the received data is encrypted (as a result of which the decryption thereof is determined), after which the Even/Odd field is referenced and a comparison is made between the value thereof and a previously received value. If the value had been an increment , it is known that the encryption key is to be updated (but if the values are the same, the encryption key will not be updated). Then, the fact that the encryption key is to be updated is notified to the authentication/key exchange processor 711 from the data encryptor/decryptor 707, and in the authentication/key exchange processor 711 since the timing for updating the encryption key Kc has been reached, Nc is incremented and the above-noted function J is used to generate a new encryption key Kc, which is passed to the data encryptor/decryptor 707.

Decrypted MPEG4 data is passed from the data encryptor/decryptor 707 to the MPEG4 data decoder 708. The MPEG4 data decoder 708 decodes this MPEG4 data, based on information from the MPEG4 expansion header receiver/interpreter 705, and outputs the results as an AV output data (for example, an analog signal).

In the above, the RTP has associated with it RTCP (Real-time Transport Control Protocol). RTCP monitors the RTP sequence number and time stamp and has the function of notifying the sending side (in the first embodiment, the MPEG4 distribution server 101) from the receiving side (in the first embodiment, the receiving apparatus 102) with regard to the receiving condition (packet discarding rate, packet transmission delay time, and the like). This is performed by the receiving condition interpreter 709 and the RTCP transmitter 710.

The MPEG4 distribution server 101 receives this RTCP packet at the RTCP receiver/interpreter 310 and, if necessary, can apply feedback to the MPEG4 data generator 301, to attempt to achieve optimization. For example, in the case in which there is a great amount of packet discarding, network crowding can be envisioned, in response to which the bit rate of the MPEG4 data generation can be lowered by feedback.

The RTCP transmitter 307 of the MPEG4 distribution server 101 transmits information required for RTCP.

On the other hand, as described above, in the receiving apparatus 102 based on the results of monitoring the Even/Odd field included in the encryption expansion header of the received packet, the value of the variable Nc used in the calculation of the encryption key Kc is changed. Therefore, if it is not possible for the sending side to reliably inform the receiving side that the value of Nc has been updated, the receiving side cannot calculate the encryption key Kc, thereby making it impossible to decrypt the arriving encrypted data.

Because the Internet is intrinsically a network on which discarding of packets can occur, it is not guaranteed that the meaning of the Even/Odd field value (timing of incrementing) will be accurately informed to the other apparatus in a communication link (particularly in the case in which there are few bits in the Even/Odd field). Because of this situation, in the case in which the receiving apparatus 102 wishes to know the precise value of Nc, it can be provided with the option to issue a request to the sending apparatus (in this embodiment, the MPEG4 distribution server 101) for the Nc value.

As an example of a case in which the receiving apparatus 102 wishes to know the precise Nc value, consider the case in which there is more skipping than expected in the time stamp or the sequence number of the RTP basic header, in which case one solution envisionable is that of sending a packet to the sending side to request the value of Nc. This is because a skip greater than a pre-established limit could mean the possibility that the Even/Odd bit value has changed. This processing is performed by the authentication/key exchange processor 311 of the MPEG4 distribution server 101 or the authentication/key exchange processor 711 of the receiving apparatus 102. By doing this, even in the event that synchronization of the Even/Odd bit is lost between the MPEG4 distribution server 101 and the receiving apparatus 102, it is possible to perform appropriate recovery processing. Furthermore, in the case in which there is notification of Nc value from the MPEG4 distribution server 101 to the receiving apparatus 102, it is possible to simultaneously send the time stamps and sequence numbers of the corresponding RTP, expansion header, or payload header as notification.

A case can be envisioned in which distributed data is accumulated in the receiving apparatus (or in some form of storage medium, such as DVD-RAM or the like, installed in the receiving apparatus), in which case the distributed data can be stored as is in the form of encrypted data, and the corresponding encryption key Kc stored together therewith.

### Second Embodiment

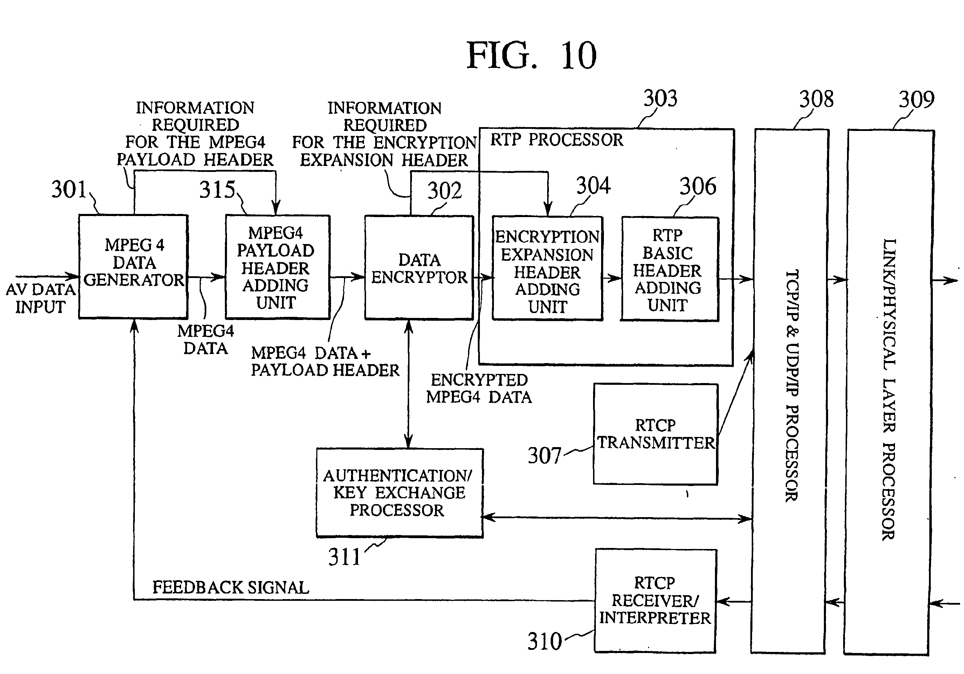

Next, the second embodiment, in which there is a variation of the packet format in the first embodiment, is described below, with reference to Fig. 10 through Fig. 15. Because the basic configuration and operation of the second embodiment is the same as that of the first embodiment, the description that follows focuses on the differences introduced with the second embodiment compared to the first embodiment.

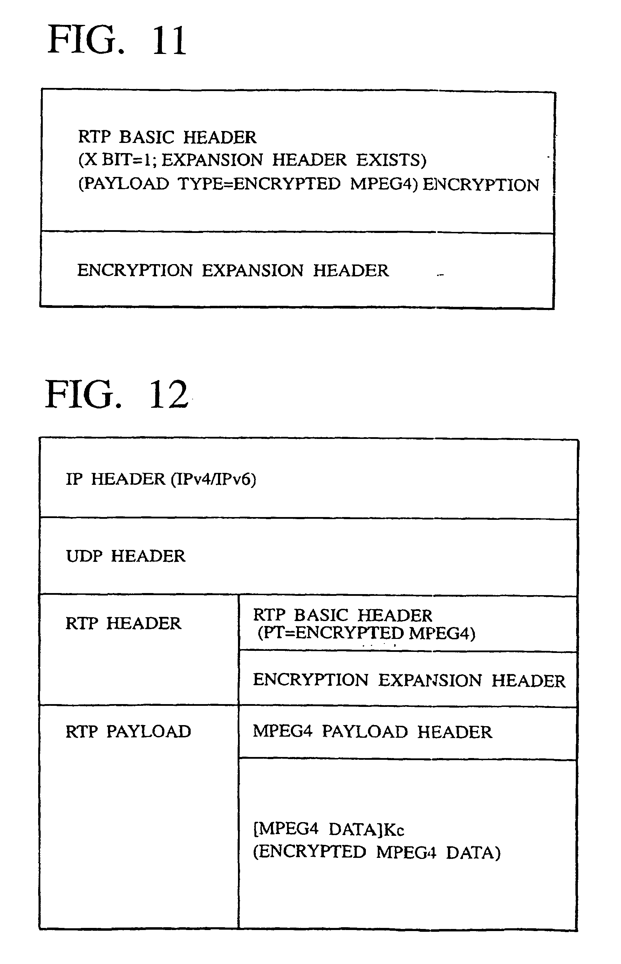

The difference in the second embodiment with respect to the first is that, whereas in the first embodiment an encryption expansion header and MPEG4 expansion header were added as expansion header in an RTP header (Fig. 6 and Fig. 7), in the second embodiment the encryption expansion header is added as the expansion header in the RTP header and the MPEG4 expansion header is added as a payload header to the RTP payload (Fig. 11 and Fig. 12).

The overall network configuration according to the second embodiment is similar to that of the first embodiment (Fig. 1). The processing sequence is also similar to that of the first embodiment (Fig. 2). The encryption expansion header format is also similar to that of the first embodiment (Fig. 5).

Fig. 10 shows an example of the configuration of an MPEG4 distribution server 101 according to the second embodiment. In this embodiment, because the MPEG4 expansion header is provided as a payload header for the RTP payload, the processing for applying the MPEG4 header is removed from the RTP processing, so that the MPEG4 expansion header adding unit 305 of Fig. 3 is removed from within the RTP processor 305 and placed outside, this becoming the MPEG4 payload header adding unit 315, which is different than in the first embodiment.

Fig. 11 shows the format of the RTP header used when sending encrypted AV data in the second embodiment. In the second embodiment, a payload type field that indicates an attribute of data that is transferred by an RTP packet (for example, encoding system) is provided in the RTP basic header. In the second embodiment, for example, if the transferred data is encrypted MPEG4 data, this field will be coded with information indicating "the data is encrypted MPEG4 data". The receiving apparatus 102 can know that transferred data is encrypted MPEG4 data with reference to this field.

Additionally in the second embodiment, the RTP basic header is provided with an X bit field that indicates whether or not there is an expansion header added to the RTP header. In the second embodiment, the arrangement is that a bit indicating "the existence of an expansion header" is set.

Fig. 12 shows the overall format of an IP packet transferred over the Internet by the second embodiment.

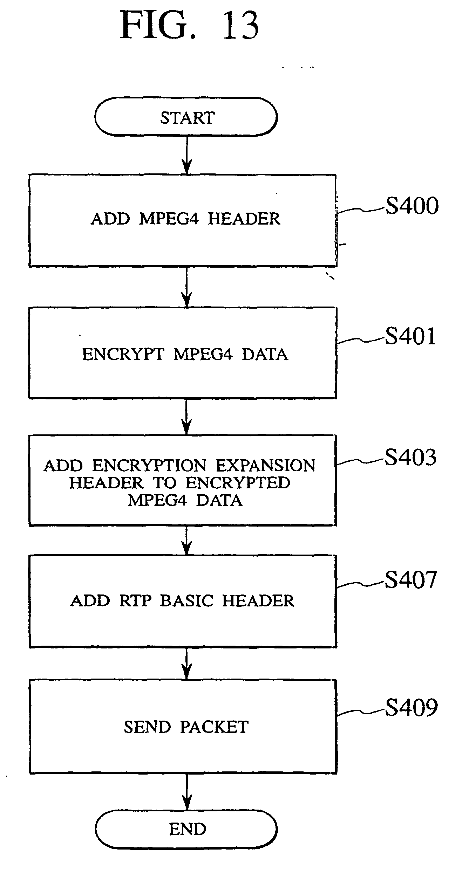

Fig. 13 is a flowchart shows the procedure for processing of content distribution in the second embodiment of the present invention. In this second embodiment, first the MPEG4 payload header adding unit 315 adds an MPEG4 payload header to the content (step S400), the step S405 shown in Fig. 4 not being carried out. The processing of the other steps S401, S403, S407, and S409 is similar to the processing as described with regard to the first embodiment. However, the header has the above-noted information set into it.

Next, the receiving apparatus 102 according to the second embodiment is described below.

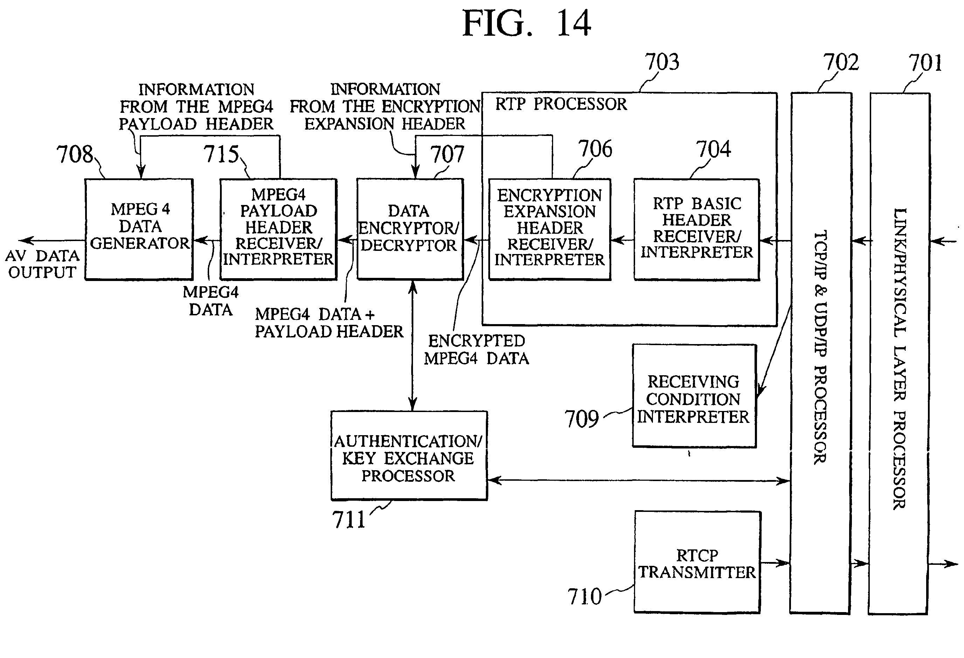

Fig. 14 shows an example of the configuration of the receiving apparatus 102 of the second embodiment. Similar to the above-noted MPEG4 distribution server 101, the processing of the MPEG4 expansion header is moved to outside of the RTP processor, the MPEG4 expansion header receiver/interpreter 705 of Fig. 8 being moved from inside the RTP processor 703 to outside, this becoming the MPEG4 payload header receiver/interpreter 715, which is different than in the first embodiment.

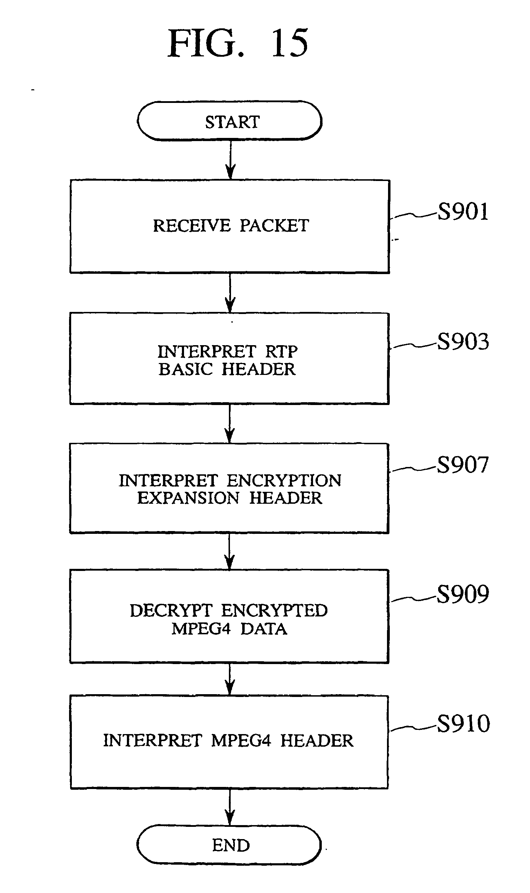

Fig. 15 is a flowchart showing the procedure for receiving processing in a receiving apparatus 102 according to the second embodiment.

At the receiving apparatus 102, first a packet is received (step S901), and at the RTP basic header receiver/interpreter 704 it is learned that the received data is encrypted MPEG4 data and that an expansion header has been added to the RTP header (step S903). Then, at the expansion header receiver/interpreter 706 it is learned that the expansion header is an encryption expansion header, and possible to learn from the encryption expansion header the encryption system and whether or not there is updating of the encryption key (step S907). Then, similar to the case of the first embodiment, at the data encryptor/decryptor 707 the encrypted MPEG4 data is decrypted (step S909), and at the MPEG payload header receiver/interpreter 715 the MPEG4 payload header is interpreted (step S910), and further, similar to the first embodiment, at the MPEG4 data generator 708, MPEG4 data is decoded, based on the results of the above interpreting, the results being outputted as an AV output data (for example, an analog signal).

In this second embodiment, in the case in which the payload type field is coded with information that includes notification of encryption, the encryption on/off field of the encryption expansion header need not be referenced, and in the case in which the payload type field is coded with information that includes notification of the encryption, this can be taken as a notification of the possibility of encryption, so that encryption on/off field in the encryption expansion header can be used for the final determination of whether or not there is encryption.

### Third Embodiment

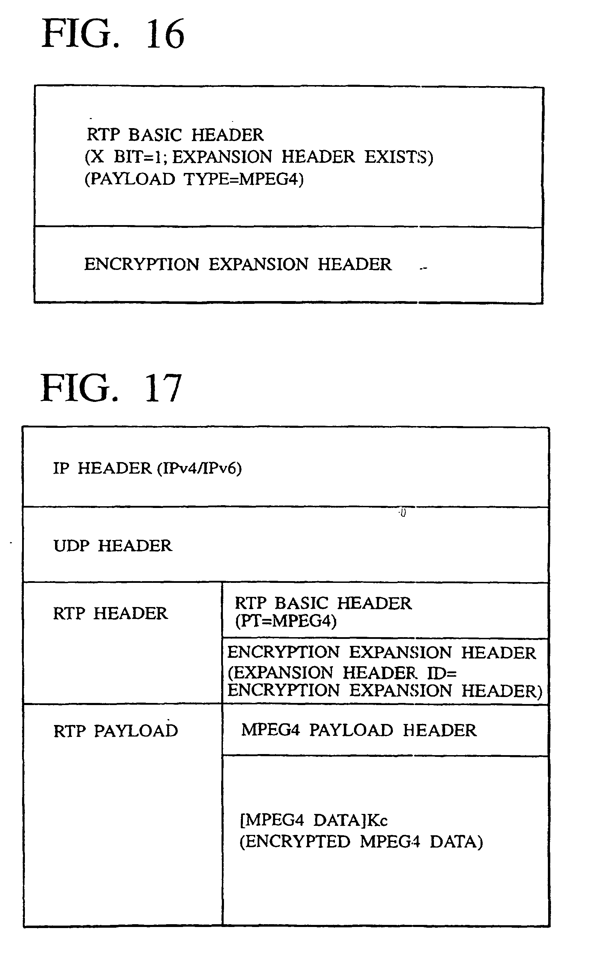

Next, the third embodiment of the present invention is described in detail below, with reference to Fig. 16 and Fig. 17. In this embodiment, the description will focus on differences with respect to the second embodiment.

The configuration and processing in the third embodiment are similar to those of the third embodiment.

Fig. 16 shows the format of the RTP header format used in transmitting encrypted AV data in the third embodiment, and Fig. 17 shows the overall IP packet format transferred via the Internet in the third embodiment.

Specifically, whereas in the second embodiment, in the payload type field within the RTP basic header information was coded that provides notification of the existence of encryption or the possibility of encryption, such as "encrypted MPEG4 data", in the third embodiment, only "MPEG4" is coded, and information including notification of encrypting or the possibility thereof is not coded in the payload type field.

In the third embodiment, therefore, while the receiving apparatus 102 can refer to the payload type field to know that the received data is MPEG4 data, recognition with regard to whether or not there is encryption is done by referencing the RTP expansion header (the encryption expansion header) of the RTP header.

In the receiving apparatus 102, at the RTP basic header receiver/interpreter 704 it is learned that the received data is MPEG4 data, and that an expansion header is added to the RTP header. Then, at the encryption expansion header receiver/interpreter 706, it is learned that the expansion header is an encryption expansion header, and it is possible to learn from the encryption expansion header whether or not there is encryption and whether or not the encryption key is updated. Thereafter, the processing is the same as in the second embodiment.

### Fourth Embodiment

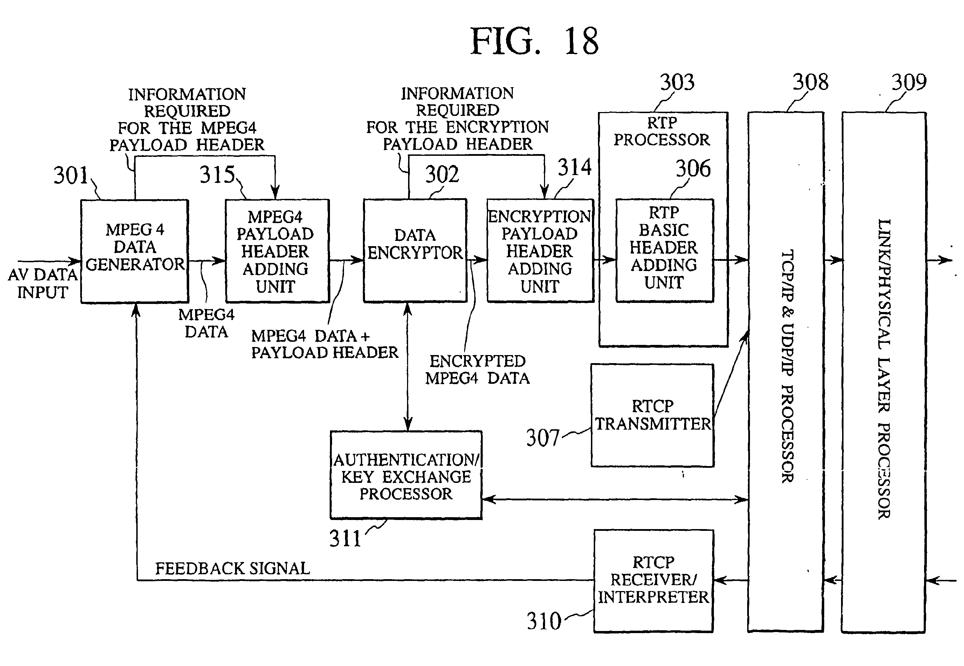

Next, the fourth embodiment of the present invention is described below with reference to Fig. 18 to Fig. 23, focusing on the difference between it and the second embodiment.

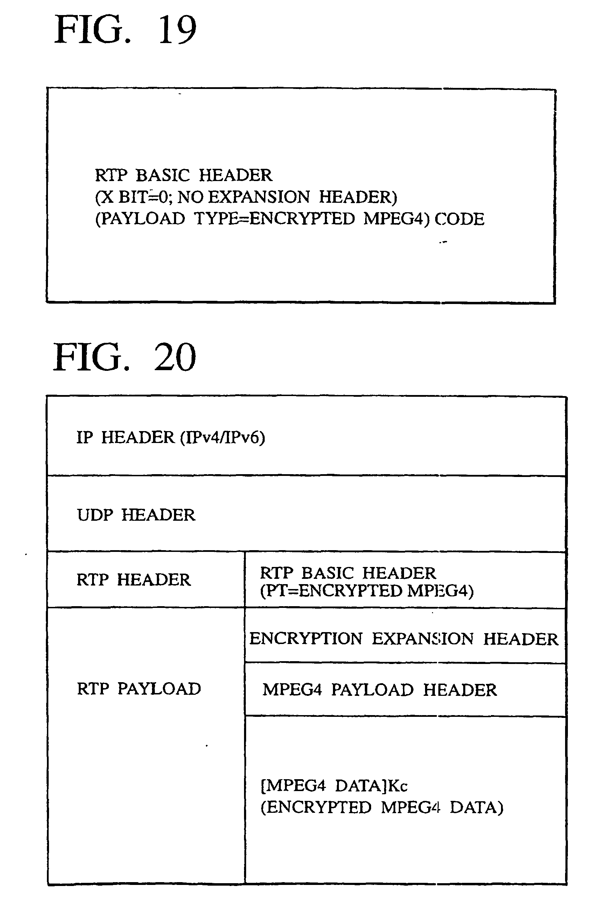

The difference between the fourth embodiment and the second embodiment is that, whereas in the second embodiment the encryption expansion header is added to the expansion header of the RTP header and the MPEG4 expansion header is provided as a payload header of the RTP payload (Fig. 11 and Fig. 12), in the fourth embodiment, both the encryption expansion header and the MPEG4 expansion header are provided as a payload header in the RTP payload (Fig. 19 and Fig. 20).

The overall conf iguration of a network according to the fourth embodiment is similar to that of an above-noted embodiment (Fig. 1), and the processing sequence is also similar to an above-noted embodiment (Fig. 2). The format of the encryption expansion header (encryption payload header in the fourth embodiment) is also the same as described above (Fig. 5).

Fig. 18 shows an example of the configuration of an MPEG4 distribution server 101 according to the fourth embodiment. In this embodiment, because the encryption expansion header added to the MPEG4 expansion header is also provided as a payload header in the RTP payload, the processing for the encryption expansion header is placed outside the RTP processor, and the encryption expansion header adding unit 304 of Fig. 10 is also moved from within the RTP processor 304 to outside, this serving as the encryption payload header adding unit 314, which is a difference with respect to the second embodiment.

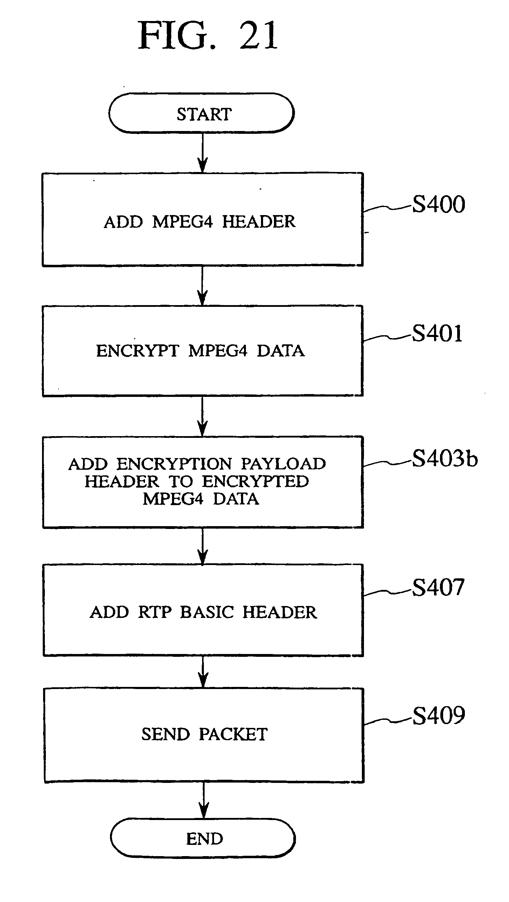

Fig. 21 is a flowchart showing the procedure for content distribution processing according to the fourth embodiment. In the fourth embodiment, in place of step S403 of Fig. 13, an encryption payload header adding unit 314 adds an encryption payload header to the encrypted MPEG4 data (step 403b). The processing at other steps S400, S401, S407, and S409 are similar to that described with regard to the above embodiment, with the exception that the above-noted information is set into the header.

Fig. 19 shows the format of the RTP header used in transmission of encrypted AV data in the fourth embodiment. With regard to the payload type field, the fourth embodiment is similar to the second embodiment. The function of the X bit field is similar to that in the second embodiment, and in this embodiment the arrangement is that a bit indicating "no expansion header (no RTP expansion header)" is set.

Fig. 20 shows the overall format of an IP packet transferred via the Internet in the fourth embodiment.

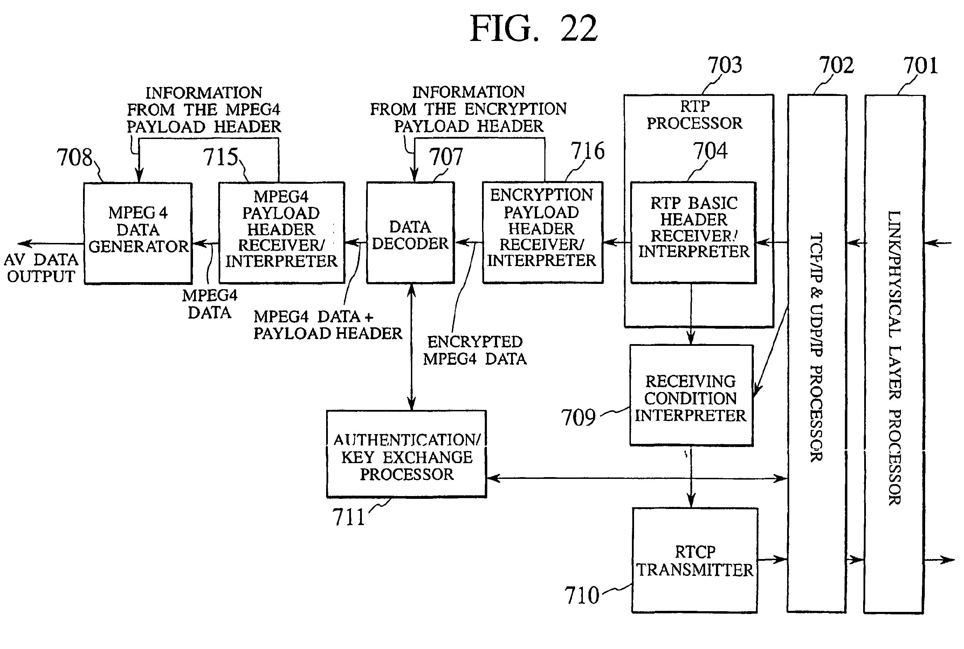

Fig. 22 shows an example of the configuration of a receiving apparatus 102 according to the fourth embodiment. Similar to the case of the above-noted MPEG4 distribution server 101, the processing of the encryption expansion header is moved to outside the RTP processor, and the encryption expansion header receiver /interpreter 706 of Fig. 11 is moved from within the RTP processor 703 to outside, this serving as the encryption payload header receiver/interpreter 716, which is a difference with respect to the second embodiment.

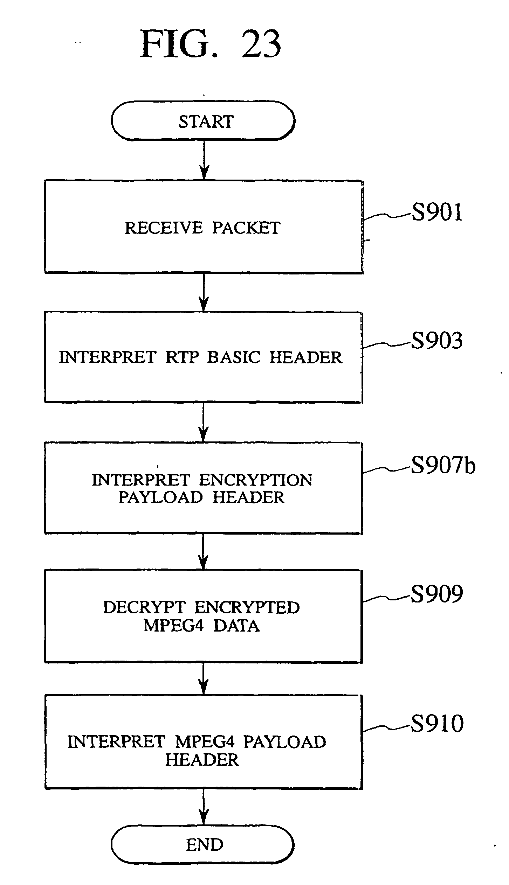

Fig. 23 shows the procedure for receiving processing in the receiving apparatus 102 in the fourth embodiment. In the receiving apparatus 102, first a packet is received (step S901), and at the RTP basic header receiver/interpreter 704 it is learned that the received data is encrypted MPEG4 data, and learned that no expansion header is added to the RTP header (step S903). In this embodiment, subsequent processing is processing for the payload. First at the encryption payload receiver/interpreter 716 it is learned that the payload is an encryption expansion header, and it is also possible to learn from the encryption payload header such information as the encryption system and whether the encryption key is updated (step S907b). Subsequent processing is similar to the case of the second embodiment, the encrypted MPEG4 data being decrypted at the data encryptor/decryptor 707 (step S909), the MPEG4 payload header being interpreted at the MPEG4 payload header receiver/interpreter 715 (step S910), the MPEG4 data being decoded at the MPEG4 data generator 708, based on the above interpretation results, and the results of this being output as an AV output data (for example, an analog signal).

Similar to the case of the second embodiment, in the fourth embodiment in a case in which information including notification of encryption is coded into the payload header, it is not necessary to refer to the encryption on/off field of the encryption payload header, and if information including notification of encryption is coded into the payload type field, this can be taken as a notification of the possibility of encryption, so that the encryption on/off field of the encryption payload header can be used for the final determination of whether or not there is encryption.

### Fifth Embodiment

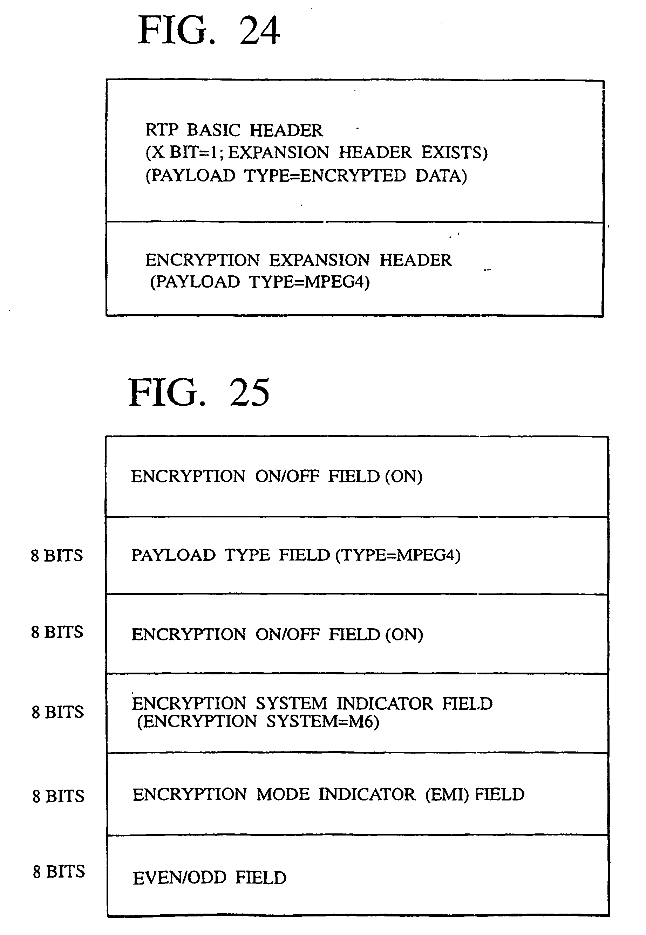

Next, the fifth embodiment of the present invention is described below, with reference to Fig. 24 through Fig. 26, the description thereof focusing on the difference with respect to the second embodiment.

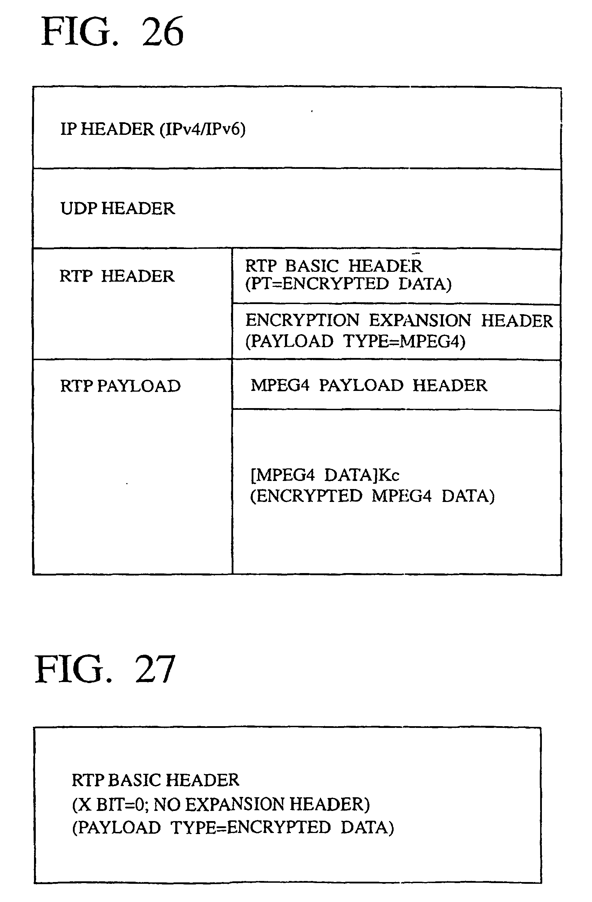

Fig. 24 shows the format of the RTP header used when transmitting encrypted AV data in the fifth embodiment. Fig. 25 shows the format of the encryption expansion header in the fifth embodiment, and Fig. 26 shows the overall IP packet transferred via the Internet in the fifth embodiment.

Whereas in the second embodiment information including notification of encrypted data attributes (for example, encoding system) such as "encrypted MPEG4" was coded into the payload type field within the RTP basic header (Fig. 11 and Fig. 12), in the fifth embodiment only information giving notification of the fact that the data is encrypted (for example, "encrypted data") is coded into the payload type header (Fig. 24 and Fig. 26). While the addition of an encryption expansion header as an expansion header to the RTP header, and the provision of an MPEG4 expansion header as a payload header to the RTP payload are the same as with the second embodiment, in the fifth embodiment the above-noted encrypted data attributes (encoding system or the like) are coded into the encryption expansion header (Fig. 5 and Fig. 25).

The overall configuration of the network according to the fifth embodiment is similar to that of an above-noted embodiment (Fig. 1), and the sequence of processing is also similar to an above-noted embodiment (Fig. 2). The internal configurations of the MPEG4 distribution server 101 and the receiving apparatus 102 are also similar to those of the second embodiment (Fig. 11 and Fig. 13).

As shown in Fig. 24, in the fifth embodiment a value indicating "encrypted data" is coded into the payload type field of the RTP basic header. The receiving apparatus 102 can refer this field to learn that the transferred data is encrypted. In the fifth embodiment, the X bit field has a bit that indicates "there is an expansion header".

As shown in Fig. 25, in the fifth embodiment, a payload type field is provided in the encryption expansion header. Information indicating the type of data (MPEG4 in this embodiment) in the payload is coded into the payload type field. The receiving apparatus 102 can refer to this field to learn the type of data transferred.

In the receiving apparatus 102, at the RTP basic header receiver/interpreter 704 it is learned that the received data is encrypted data, and that there is an expansion header added to the RTP header. Then, at the encryption expansion header receiver/interpreter 706 is it learned that this expansion header is an encryption expansion header, and from the encryption expansion header it is possible to learn such information as the encryption system, whether or not the encryption key is updated, and the type of data in the payload. Similar to the case of the second embodiment, the encrypted MPEG4 data is decrypted at the data encryptor/decryptor 707, the MPEG4 payload header is interpreted at the MPEG4 payload header receiver/interpreter 715, at the MPEG4 data generator the MPEG4 data is decoded based on the results of the above interpretation, and the results are output as an AV output data (for example, an analog signal).

In the fifth embodiment, similar to the case of the second embodiment, in the case in which information including notification of encryption is coded into the payload type field, it is not necessary to refer to the encryption on/off field of the encryption expansion header, and if information including notification of encryption is coded into the payload type field in the RTP basic header, this can be taken as a notification of the possibility of encryption, so that the encryption on/off field of the encryption expansion header can be used for the final determination of whether or not there is encryption.

### Sixth Embodiment

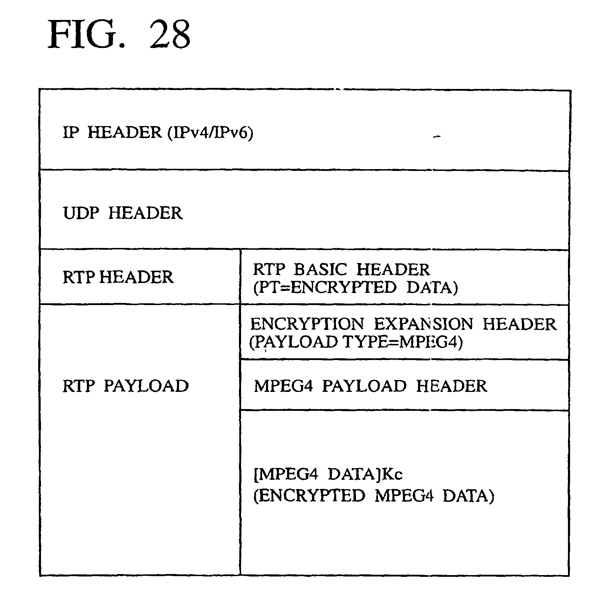

Next, the sixth embodiment of the present invention is described below with reference to Fig. 27 and Fig. 28, the description focusing on the difference with respect to the fourth embodiment.

Fig. 27 shows the format of the RTP header used when transmitting encrypted AV data in the sixth embodiment. The encryption expansion header of this embodiment is similar to that shown in Fig. 25. Fig. 28 shows the overall format of an IP packet transferred via the Internet in the sixth embodiment.

That both the encryption expansion header and the MPEG4 expansion header are provided as an RTP payload header is similar to the fourth embodiment (Fig. 19 and Fig. 20). However, in contrast to the fourth embodiment, wherein information including notification of attributes of encrypted data, such as the encoding system, for example, "encrypted MPEG4" are coded into the payload type field within the RTP basic header, in the sixth embodiment, only information giving notification about the existence of encryption (such as "encrypted data") is coded into the payload type field (Fig. 27 and Fig. 28). Additionally, while the fact that an encryption expansion header is added as an expansion header of the RTP header, and an MPEG4 expansion header is added as a payload header to the RTP payload are the same as in the second embodiment, in the sixth embodiment the above-noted encrypted data attributes (for example, encoding system) are coded within the encryption expansion header (Fig. 5 and Fig. 25)

The overall configuration of the network according to the sixth embodiment is similar to an above-noted embodiment (Fig. 1), and the sequence of processing is also similar to an above-noted embodiment (Fig. 2). The internal configuration of the MPEG4 distribution server 101 and the receiving apparatus 102 are also similar to those of the fourth embodiment (Fig. 18 and Fig. 22).

As shown in Fig. 27, in the sixth embodiment a value indicating "encrypted data" is entered into the payload type field of the RTP basic header. By referring to this field, the receiving apparatus 102 can know that the transferred data is encrypted data. The X bit field has a bit that indicates "there is no expansion header". Similar to the case of the fourth embodiment, information indicating the type of data in the payload (MPEG4 in this embodiment) is coded into the payload type field of the encryption expansion header.

In the receiving apparatus 102, at the RTP basic header receiver/interpreter 704 it is learned that the received data is encrypted, and it is learned that no expansion header is added to the RTP header. In the sixth embodiment, subsequent processing is with respect to the payload. First, at the encryption payload receiver/interpreter 716 it is learned that the payload header is an encryption expansion header, and it is possible to learn from the encryption payload head such information as the encryption system, whether the encryption key is updated, and type of data in the payload. In the same manner as in the fourth embodiment, at the data encryptor/decryptor 707 the encrypted MPEG4 data is decrypted, at the MPEG payload header receiver/interpreter 715 the MPEG4 payload header is interpreted, at the MPEG4 data generator 708 the MPEG4 data is decoded based on results of the above interpretation, the results being output as an AV output data (for example, an analog signal).

In the sixth embodiment, similar to the case of the fourth embodiment, in the case in which information including notification of encryption is coded into the payload type field of the RTP basic header, it is not necessary to refer to the encryption on/off field in the encryption expansion header, and if information including notification of encryption is coded into the payload type field, this can be taken as a notification of the possibility of encryption, so that the encryption on/off field of the encryption expansion header can be used for the final determination of whether or not there is encryption.

### Seventh Embodiment

Whereas in the first embodiment to the sixth embodiment, the present invention was applied to a system in which RTP was used as a transport protocol, the present invention can also be applied to systems using other protocols.

In the seventh embodiment, instead of using RTP as the transport protocol, the distribution of MPEG4 data is performed using HTTP (Hyper-Text Transfer Protocol), that is, a protocol for use between WWW servers and Web browsers.

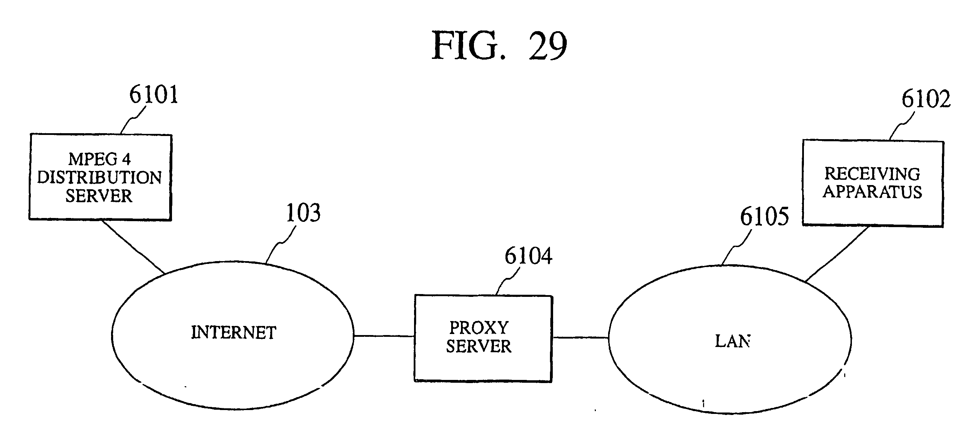

Fig. 29 shows an example of the configuration of an information distribution system in the seventh embodiment. In system shown in Fig. 29, anMPEG4 distribution server 6101 according to the seventh embodiment is connected to the Internet 103, and a receiving apparatus 6102 according to the seventh embodiment is connected to a LAN 6105, the LAN 6105 being connected to the Internet 103 via a proxy server 6104. The receiving apparatus 6102 performs AV stream communication secretly with the MPEG4 distribution server 6101, via the LAN 6105, the proxy server 6104 and the Internet 103. Of course, other MPEG4 distribution servers and other types of equipment can also be connected to the Internet 103, and other receiving apparatuses and other types of equipment can also be connected to the LAN 6105.

Although in the seventh embodiment, the description is that of the case in which the data type is MPEG4, it will be understood, of course, that the present invention is not restricted to this type of data.

In Fig. 29, the various equipment supports IP. However, because of the HTTP proxy server 6104 between the LAN 6105 and the Internet 103, the IP address on the LAN 6105 can be either a global IP address or a private (local) IP address. The term proxy server as used herein refers to a server that at one point terminates HTTP (or some other protocol) between the Internet and an intranet, and functions so as to join HTTP sessions at both ends of the proxy server, and is provided to enable the distribution of HTTP content data requested by substantial receiving apparatus (Web browser) to a distribution server (Web server), and functions in the reverse direction as well. Details about proxy servers can be found at, for example, the URL http://squid.nlanr.net/Squid. In the seventh embodiment, the MPEG4 distribution server 6101 can be a WWW server, and the receiving apparatus 6102 can also be a browser.

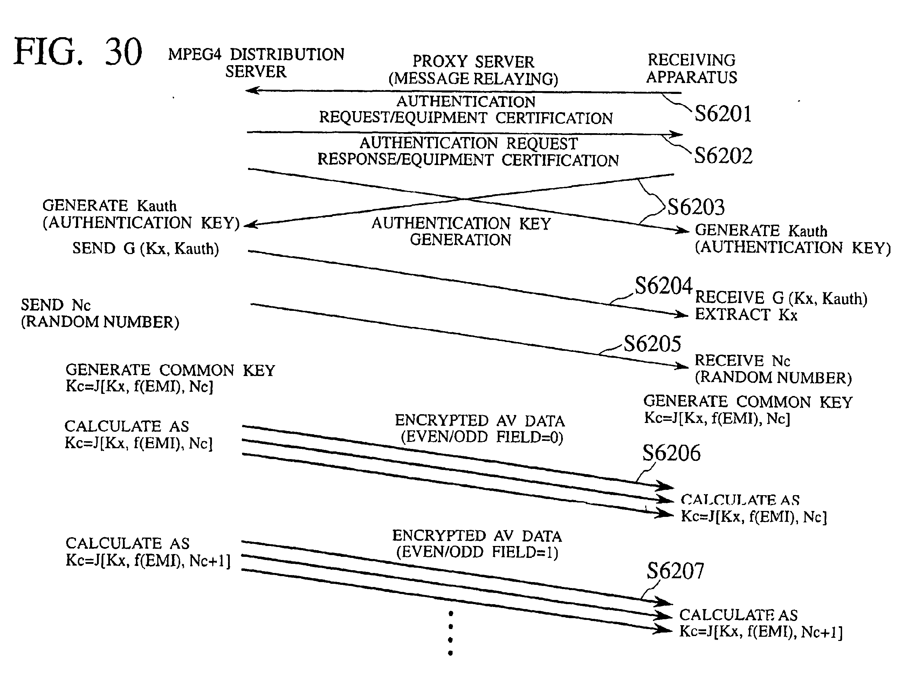

Fig. 30 shows an example of the sequence of the authentication process, key exchange process, and encrypted data transmission. Because the proxy server 6104 is disposed between the receiving apparatus 6102 and the MPEG4 distribution server 6101, the actual messages (messages transferred as HTTP messages) are in reality relayed via the proxy server 6104, this being the only difference with respect to previously described embodiments (Fig. 2), with other elements of the procedure being the same as previously described procedures.

With regard to the MPEG4 distribution server 6101, the receiving apparatus 6102 , the packet format, if parts of the units in the first through the sixth embodiments dependent upon the transport protocol are modified to accommodate the HTTP protocol, it is possible to configure an MPEG4 distribution server 6101, a receiving apparatus 6102, and a packet format conforming to the HTTP protocol. In the following, the example is that in which an encryption expansion header is added as an expansion header, and in which an MPEG4 expansion header is provided as a payload header (as in the second embodiment).

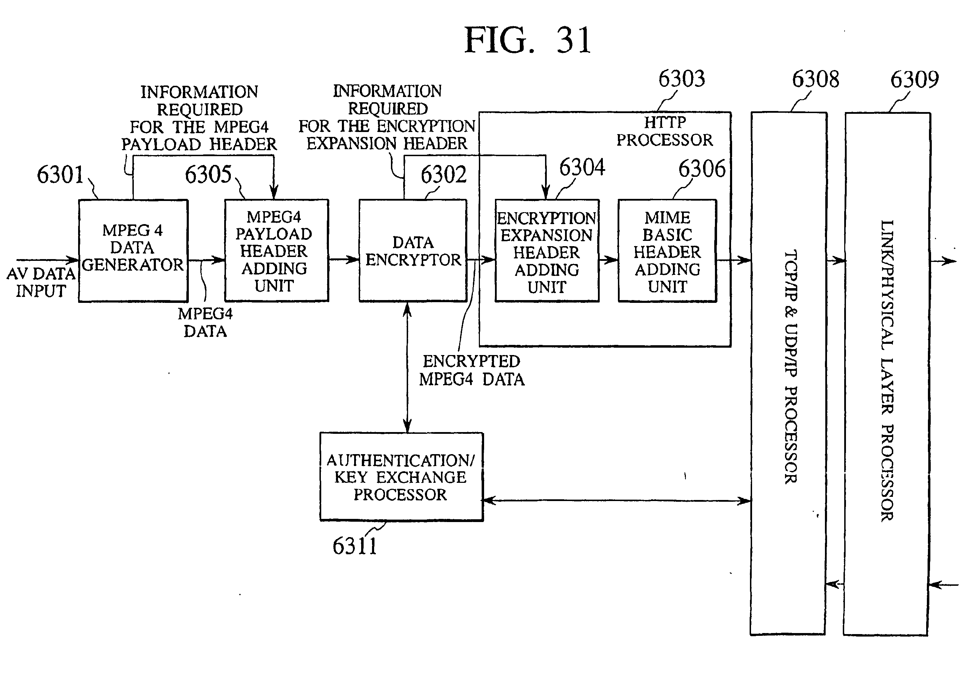

Fig. 31 shows the internal configuration of the MPEG4 distribution server 6101.

As shown in Fig. 31, the MPEG4 distribution server 6101 according to the seventh embodiment comprises an MPEG4 data generator 6301, a data encrypter 6302, an MPEG4 payload header adding unit 6305, an HTTP processor 6303 that includes an encryption header adding unit 6304 and a MIME header adding unit 6306, a TCP/IP and UDP/IP processor 6308, a link/physical layer processor 6309, and an authentication/key exchange processor 6311.

Processing related to authentication and encryption of the sequence shown in Fig. 30 (from S6201 to S6205) and processing related to encryption key updating is performed by the authentication/key exchange processor 6311.

The HTTP processor 6303 corresponds to the RTP processor in previously described embodiments, and the MIME (Multipurpose Internet Mail Extensions) header adding unit 6306 corresponds to the RTP basic header adding unit in previously described embodiments.

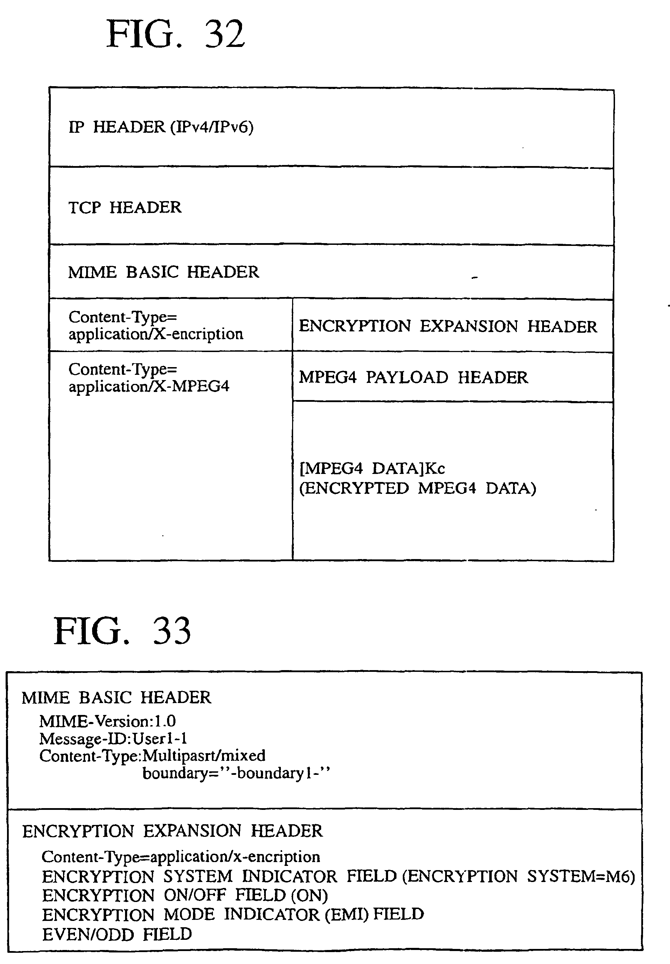

Fig. 32 shows an IP packet that is transferred on the Internet (and LAN), and Fig. 33 shows details of the MIME basic header and encryption expansion header.

In the seventh embodiment, the encryption expansion header is transferred as part of the MIME. For this reason, with regard to the encryption expansion header, information indicating that "this is an encryption expansion header" is coded into the Content-Type of the MIME. The MPEG4 expansion header is transferred as part of the MIME, along with the encrypted MPEG4 data as payload header. For the encrypted MPEG4 data to which MPEG4 expansion header added, information indicating that "this is MPEG4 data" is coded into the MIME Content-Type. For details with regard to MIME, refer to RFC 2045, for example.

The format of the encryption expansion header is the same as was described for the first embodiment.

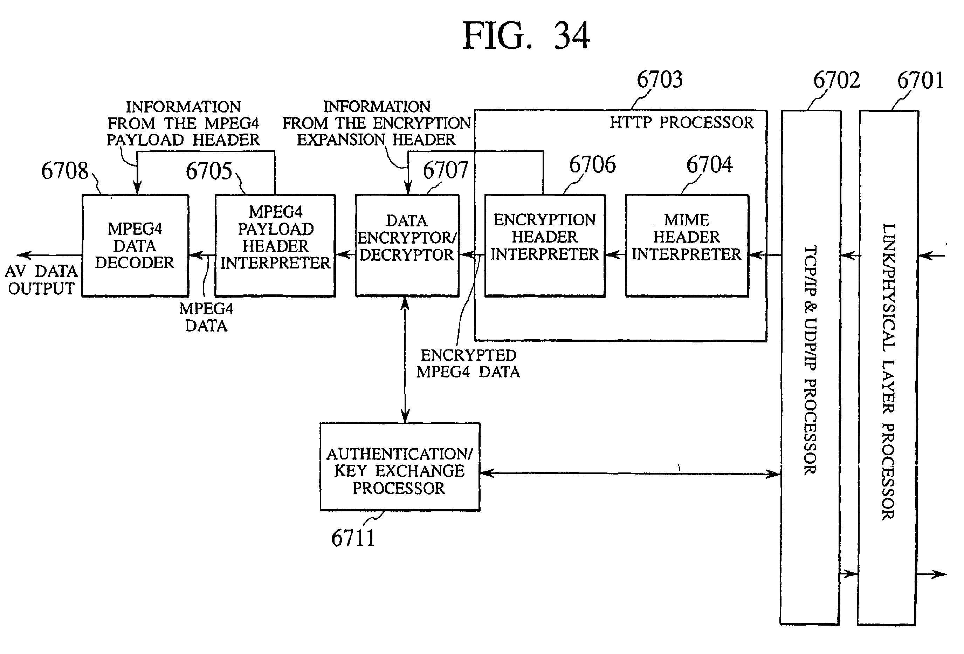

Fig. 34 shows an example of the internal configuration of the receiving apparatus 6102.

As shown in Fig. 34, the receiving apparatus 6102 according to the seventh embodiment comprises a link/physical layer processor 6701, a TCP/IP and UDP/IP processor 6702, an HTTP processor 6703 that includes a MIME header interpreter 6704 and an encryption header interpreter 6706, an MPEG4 payload header interpreter 6705, a data encryptor/decryptor 6707, an MPEG4 data decoder 6708, and an authentication/key exchange processor 6711.

Processing related to authentication and encryption in the sequence of Fig. 30 (processing from S6201 to S6205) and processing related to encryption key updating is performed by the authentication/key exchange processor 6711.

The HTTP processor 6703 corresponds to the RTP processor shown in the above-described embodiments, and the MIME header interpreter 6704 corresponds to the RTP basic header receiver/interpreter in the above-described embodiments.

In the MPEG4 distribution server 6101, the inputtedAV content (for example, an analog signal) is compressed to MPEG4 data by the MPEG4 data generator 6301. Required information is sent as notification to the MPEG4 payload header adding unit 6305 from the MPEG4 data generator 6301.

Next, the MPEG4 data outputted from the MPEG4 data generator 6301 is encrypted by the data encrypter 6302. The encryption key used when doing this is the above-described time-variant encryption key Kc. Required information is sent as notification to the encryption header adding unit 6304 from the data encrypter 6302.

Next, in the HTTP processor 6303, at the encryption header adding unit 6304, the encryption expansion header is added, and at the MIME header adding unit 6306, a MIME header is added.

Encrypted MPEG4 data to which has been added a MIME header is sent as a packet shown in Fig. 32 to the Internet 6103 by the TCP/IP and UDP/IP processor 6308, via the link/physical layer processor 6309.

In the receiving apparatus 6102, at the MIME header interpreter 6704, it is learned that there is a possibility that the received data is encrypted, and that an encryption expansion header is added as part of the MIME. At the encryption header interpreter 6706 it can be learned from the encryption expansion header whether or not encryption is present, the encryption system and whether the encryption key is updated. In the same manner as in the case of the second embodiment, the data encryptor/decryptor 6707 decrypts the encrypted MPEG4 data, at the MPEG4 payload header interpreting section 6 715 the MPEG4 payload header (similar to the MPEG4 payload header in previously described embodiments) is interpreted, and at the MPEG4 data generator 6708 the MPEG4 data is decoded based on the results of the above interpretation, the result being output as an AV output data (for example, an analog signal).

In the above, the encryption expansion header is added as an expansion header and the MPEG4 expansion header was provided as a payload header on the payload. However, it is also possible to use a different configuration, for example one in which the encryption expansion header and MPEG4 expansion header are added as an expansion header, or in which the encryption expansion header and MPEG4 expansion header are provided as a payload header on the payload.

While in the first to seventh embodiments an Even/Odd field in the encryption expansion header (or encryption payload header) was used to notify the receiving side from the sending side of updating of the variable value Nc used for generating the encryption key Kc, instead of using the Even/Odd field, it is possible to send the value of Nc, in which case the Nc value can be randomly generated, as opposed to simply being incremented. The value of Nc can also be changed for each individual packet.

While in the first to seventh embodiments RTP or HTTP was used as the transfer protocol, it will be understood that other protocols can also be used, and further that the network to which the present invention is applied is not limited to the Internet. For example, any kinds of local area network, such as Bluetooth, can use the methods of this invention. Further, the present invention has no restriction in application to the case in which the transferred data is MPEG4 data.

Although in the second, third, and fifth embodiments, the data encryptor 302 and data encryptor/decryptor 707 were provided outside the RTP processors 303 and 307, these can alternately be provided within the RTP processors 303 and 307.

### Eighth Embodiment

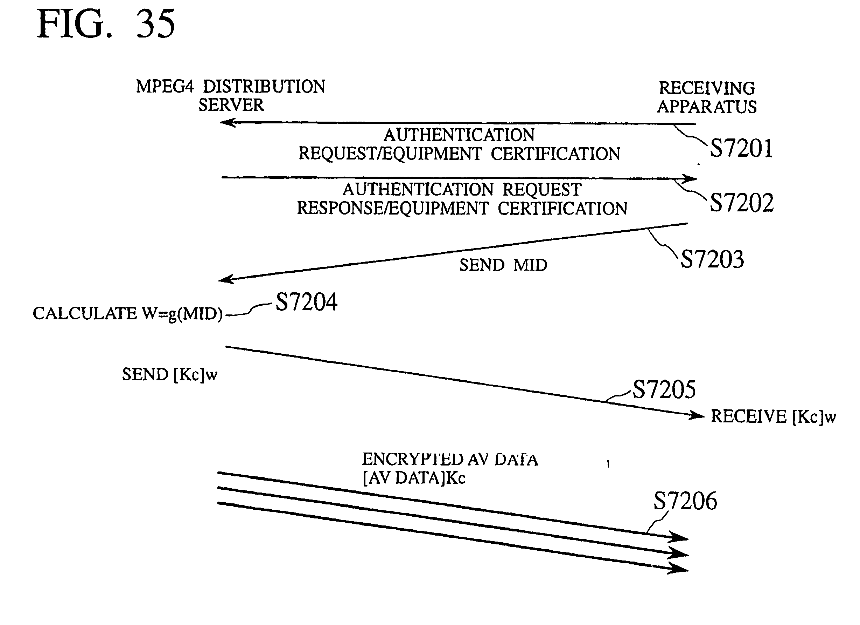

Next, the eighth embodiment of the present invention is described below with reference to Fig. 35.

Whereas in the first to the seventh embodiments, the description was for the sequence shown in Fig. 2, it is understood that the present invention can be applied to other sequences as well.

The description that follows is for other sequences, for the case in which MPEG4 data distributed from an MPEG4 distribution server is stored by the receiving apparatus.

The configuration of the information distribution system according to the eighth embodiment is similar to that shown in Fig. 1. In Fig. 1, an MPEG4 distribution server 101 and a receiving apparatus 102 according to the eighth embodiment are connected to the Internet 103, MPEG4 AV stream data being secretly communicated between the MPEG4 distribution server 101 and the receiving apparatus 102, via the Internet 103. Of course, other MPEG4 distribution servers and receiving apparatuses and other types of equipment can additionally be connected to the Internet 103.

In the description of the eighth embodiment, while the type of data is MPEG4, it will be understood that the eighth embodiment is not restricted to application to this type of data, and can be applied to other data types as well.

The MPEG4 distribution server 101 performs distribution of MPEG4 data to the receiving apparatus 102. MPEG4 data is distributed not in the form of file transfer, but rather as a stream. When this is done, the MPEG4 data that is to be copyright protected is distributed in encrypted form. Before distribution, an authentication procedure or key exchange procedure is performed between the MPEG4 distribution server 101 and the receiving apparatus 102.

An example of the sequence used is shown in Fig. 35.

In Fig. 35 shows the sequence of content layer encryption and authentication, and it should be noted that security in layers such as the IP layer and transport layer and authentication procedures in those layers have been omitted from this drawing, as has the procedure for assessing charges at the content layer, which is performed earlier (although there are cases in which charge assessment and authentication/encryption at other layers are not performed).

Similar to the case of the first embodiment, the MPEG4 distribution server 101 and the receiving apparatus 102 perform authentication and exchange of a certificate (equipment certificate) (S7201, S7202).

The MPEG4 distribution server 101 must notify the receiving apparatus 102 of the encryption key Kc for decrypting the content (AVdata that is sent), and the following measure is taken to prevent the unlimited unauthorized copying of the content at the receiving apparatus 102. Specifically, when performing storage onto a storage medium (for example, a DVD-RAM) of the receiving apparatus 102, AV data is stored in encrypted form. When the data stored on the storage medium is to be played back, a check is made as to whether the data was properly stored on the storage medium and, if not, playback is not possible. That is, if digital copying is done from this storage medium onto another storage medium (for example, onto another DV-RAM), playback is prevented from the copying destination medium.

For this reason, notification of the MID, which is the ID (serial number) of the storage medium used at the receiving apparatus 102 is given from the receiving apparatus 102 to the MPEG4 distribution server 101 (step S7203), and at the MPEG4 distribution server 101 this MID value is used to encrypt the encryption key Kc and notify the receiving apparatus 102 (step S7204). More specifically, using a pre-established function g an encryption key W is generated of the form W=g(MID), and this encryption key W is used to encrypt the encryption key Kc (the encryption key Kc encrypted by the encryption key W being represented as [Kc]w), [Kc]w being then transmitted. In this arrangement, the value of MID is unique to each individual storage medium, and is located in a region of ROM, for example, that cannot be overwritten.

Having received the above-noted [Kc]w, the receiving apparatus 102 generates the encryption key W in the form W=g(MID), using the same function g that was used at the MPEG4 distribution server 101, this encryption key W being used to decrypt [Kc]w so as to recover the encryption key Kc.

Thereafter, at the MPEG4 distribution server 101 MPEG4 data is generated from the AV data, and MPEG4 data is encrypted using the encryption key Kc shared as described above, the encrypted MPEG4 data being then transmitted to the receiving apparatus 102 (step S7206).

At the receiving apparatus 102, the received encrypted MPEG4 data is decrypted using the encryption key Kc determined as noted above and decrypted MPEG4 data is decoded, resulting in output of an AV output data.

In the eighth embodiment, the receiving apparatus 102 has a function which, simultaneously with receiving the AV data (MPEG4 data encrypted with the encryption key Kc), or after entering it into a buffer or the like, stores the received AV data in the form of MPEG4 data encrypted using the encryption key Kc, along with the value of [Kc]w, onto a storage medium having the above-noted MID.

When the above is done, an apparatus for playing back the AV data (MPEG4 data encrypted with the encryption key Kc) stored on the proper storage medium (which can be the receiving apparatus 102, or another equipment) first reads the values of [Kc]w and MID from the storage medium, and then generates the encryption key W in the form W=g(MID), this encryption key W being used to decrypt [Kc]w so as to recover the encryption key Kc. Then the AV data (MPEG4 data encrypted by the encryption key Kc) stored on the storage medium is read out and, after decrypting with the encryption key Kc, the decrypted MPEG4 data is decoded.

If AV data (MPEG4 data encrypted by the encryption key Kc) recorded on a storage medium having a given MID of MID1 is copied onto a storage medium having a MID of MID2, at the equipment that plays back the data recorded on the copy destination storage medium, because it is not possible to obtain the original MID value, it is not possible to generate W, and therefore not possible to determine the encryption key Kc from the recorded [Kc]w. As a result, it is not possible to decrypt the recorded encrypted data.

That is, if proper values of Kc, W, and [Kc]w are Kc1, W1=g(MID1), and [Kc]w1, because the MID read out from the copy destination storage medium is MID2, the encryption key W generated therefrom is W2=g(MID2) and if the [Kc]w1 read from the storage medium is decrypted using W2, a value that is different from Kc results (this being called Kc'). Therefore, an attempt to decrypt data [Data]Kc encrypted with Kc using Kc' will result in generation of Data' , which is different from the original data Data, making it impossible to recover the original data Data.

Thus, even if the received AV data (MPEG4 data encrypted by the encryption key Kc) is copied onto a different storage medium, because the value of MID of that storage medium is different, it is possible to prevent playback of the AV data, thereby enabling prevention of unauthorized copying.

In the eighth embodiment, the RTP header, encryption expansion (payload) header, and MPEG4 expansion (payload) header and the like can have the same format as described with regard to the first through the seventh embodiments.

Although the above-noted description is for the case in which MPEG4 was used as the encoding system, it will be understood that the present invention can be applied to other encoding systems as well, in which case it is merely necessary to modify the constituent elements of each of the embodiments (for example, the MPEG4 data generator, the MPEG4 expansion header adding unit, the MPEG4 data decoder, the MPEG4 expansion header receiver/interpreter, and the like), the expansion header (MPEG4 expansion header and MPEG4 payload header), and the payload type coding to suit the selected type of encoding system.

The distribution server of the described embodiments, if necessary, can also be made to send content in unencrypted form. That is, the coding of the encryption on/off field and payload type field and the like can be established as appropriate to the existence or non-existence of encryption. The receiving side as well can check for the presence of encryption from the header of a received packet, and control decryption processing accordingly.

The transport protocol used in the foregoing embodiments includes at least RTP or HTTP.

The present invention can also be embodied as a method and a method according to the present invention can be embodied as an apparatus. Additionally, the functions of the present invention can be embodied as software as well.

The present invention embodied as either an apparatus or a method can be further embodied as a computer-readable storage medium for storage of a program to be executed by a computer, following a procedure corresponding to the present invention (or a program for causing a computer to function as a means corresponding to the present invention or a program for implementing the functions of the present invention with a computer). That is, a program for the purpose of implementing the processing for content distribution and receiving according to the present invention can be stored onto various types of storage media. The storage medium is then read by the CPU of a computer implemented in hardware, and the stored program is then executed to embody the present invention. The term storage medium used herein can be taken as referring to semiconductor memory, magnetic disk (floppy disk or hard disk), optical disk (CD-ROM or DVD or the like), and any other medium that can be used to store a program. Additionally, the program can be distributed by various communications means, such as a network.

In summary, according to the present invention an encryption expansion header is provided in the form of a expansion header or payload header in a transport protocol such as RTP (Real-time Transport Protocol) or HTTP (Hyper-text Transfer Protocol), and encryption attribute information with regard to encryption is coded into this encryption expansion header (for example, presence of encryption, encryption system, information with regard to copying (encryption mode indicator: EMI), information (Even/Odd field) on which to base generation of a content key (common key) and the like), and by doing so content data is sent securely from the sending side to the receiving side, and it is possible at the receiving side to decrypt the encrypted content data transferred as a payload.

In RTP in the past, only the type of encoding system used with data of the payload was coded in the payload type field, so that in the case in which the data stored in the payload was encrypted not in at the network or transporter layer, but rather at the content layer, there was no method of giving notification of this to the other side.

On the other hand, with the present invention, because coding is provided in the RTP payload type field to the effect that the content is "encrypted data" or "encrypted data encoded by a specific encoding system", it is possible to give notification of this to the other side, thereby enabling sufficient copy protection in sending and receiving encrypted content as described above.

According to the present invention as described above, it is possible to expand the distribution of digital content, providing copy protection for AV streaming that covers not only IEEE 1394, but also networks such as the Internet and LAN.

It is to be noted that, besides those already mentioned above, many modifications and variations of the above embodiments may be made without departing from the noel and advantageous features of the present invention. Accordingly, all such modifications and variations are intended to be included within the scope of the appended claims.

## Claims

1. A content information distribution apparatus for distributing encrypted content information, via a network in accordance with a prescribed transport protocol, to end-apparatus in a communication authenticated by an authentication process including at least one procedure of an authentication procedure and a key exchange procedure, the distribution apparatus having a unit (302) for encrypting content information encoded by a prescribed encoding system, a unit (303) for generating a transport header and performing transport protocol processing required to transfer the content information, and a unit (309) for sending a packet to the authenticated end apparatus, **characterised in that** the generating unit (303) comprises:
a unit (304) for generating an encryption attribute header to be added to the encrypted content information, which includes copy attribute information necessitated for preventing unauthorized copying of the content information based on data sent from the unit (302); and
a unit (306) for generating a basic transport header to be added to the content information to which the encryption attribute header has been added,
wherein the sent packet includes the basic transport header, the encryption attribute header, and the encrypted content information, wherein the encryption attribute header is set between the basic transport header and the encrypted content information, and
the copy attribute information indicates copiability and the number of copies of the encrypted content information.

2. The apparatus according to claim 1, wherein the encryption attribute header includes at least one of an indicator of the existence or non-existence of encryption of the content information and an indicator of the encryption system of the content information.

3. The apparatus according to claim 1, wherein the encryption attribute header includes a copy attribute field having a plurality of bits with regard to the number of copying of the content information.

4. The apparatus according to claim 1, wherein the encryption attribute header includes a counter field indicating a change in an encryption key.

5. The apparatus according to claim 1, wherein the encryption attribute header generating unit (304) sets the encoding information, which indicates the encoding system for the content information, into the expansion transport header or into the payload header.

6. The apparatus according to claim 1, wherein the transport header generating unit (306) further codes into the basic transport header at least information indicating that there is a possibility that the content information is encrypted, and wherein the encryption attribute header generating unit (304) codes into the expansion header at least information as to whether or not the content information to be transferred is encrypted.

7. The apparatus according to claim 1, wherein the encryption attribute header generating unit (304) codes into the expansion header information as to whether or not the content information to be transferred is encrypted.

8. The apparatus according to claim 1, further comprising:
a unit (305) for generating a content attribute header that includes content attribute information with regard to content information, and for setting this content attribute header into the expansion transport header or into the payload header.

9. The apparatus according to claim 8, wherein the content attribute header is not encrypted.

10. The apparatus according to claim 1, wherein the encrypting unit (302) generates the encryption key based on an identifier that uniquely identifies a storage medium sent from the end apparatus in a communication.

11. A content information receiving apparatus arranged to be authenticated by an authentication process including at least one procedure of an authentication procedure and a key exchange procedure and which, in use receives encrypted content information via a network in accordance with a prescribed transport protocol, the receiving apparatus having a unit (701) for receiving a packet from a sending apparatus, a unit (703) for referring to a transport header and performing transport protocol processing required to receive the content information, and a unit (707) for decrypting the content information encoded by a prescribed encoding system, **characterised in that** the referring and performing unit (703) comprises:
a unit (706) for referring to an encryption attribute header added to the content information, which includes copy attribute information necessitated for preventing unauthorised copying of the content information and judging whether or not the content information is encrypted or whether there is a possibility that the content information is encrypted; and
a unit (704) for referring to a basic transport header added to the content information to which the encryption attribute header has been added,
wherein the received packet includes the basic transport header, the encryption attribute header, and the encrypted content information, and
the encryption attribute header is set between the basic transport header and the encrypted content information, and
the copy attribute information indicates copiability and the number of copies of the encrypted content information.

12. The apparatus according to claim 11, wherein the referring unit (706), when there is a possibility that the content information is encrypted, refers to the encryption attribute header and judges whether or not the content information is encrypted.

13. The apparatus according to claim 11, wherein the referring unit (706) refers to the basic transport header or to the encryption attribute header to make a judgement as to the encoding system of the content information.

14. The apparatus according to claim 11, further comprising:
a unit (709,710) for referring to a received basic transport header and, when a prescribed delay time has elapsed or a prescribed number of packets have been discarded, for requesting that the sending apparatus send a prescribed encryption parameter.

15. A method of distributing encrypted content information, via a network in accordance with a prescribed transport protocol, to other end apparatus in a communication authenticated by an authentication process including at least one procedure of an authentication procedure and a key exchange procedure, having the steps of encrypting content information encoded by a prescribed encoding system (S401), generating a transport header and performing transport protocol processing required to transfer the content information (S403, S405), and sending a packet to the authenticated end apparatus (S409), **characterised in that** the performing step comprises:
generating an encryption attribute header to be added to the encrypted content information, which includes copy attribute information necessitated for preventing unauthorised copying of the content information (S403), based on data sent from the encrypting step (S401); and
generating a basic transport header to be added to the content information to which the encryption attribute header has been added (S407),
wherein the sent packet includes the basic transport header, the encryption attribute header, the content attribute header and the encrypted content information (S409), and
wherein the encryption attribute header is set between the basic transport header and the encrypted content information and
the copy attribute information indicates copiability and the number of copies of the encrypted content information.

16. A method of receiving encrypted content information, via a network in accordance with a prescribed transport protocol, by an authentication process including at least one procedure of an authentication procedure and a key exchange procedure, having the steps of receiving a packet from a sending apparatus (S901), referring to a transport header and performing transport protocol processing required to receive the content information (S903, S907), and decrypting the content information encoded by a prescribed encoding system (S909), **characterised in that** the referring step comprises:
referring to a basic transport header added to the content information (S903); and
referring to an encryption attribute header added to the content information, which includes copy attribute information necessitated for preventing unauthorized copying of the content information and judging whether or not the content information is encrypted or whether there is a possibility that the content information is encrypted (S907),
wherein the received packet includes the basic transport header, the encryption attribute header, and the encrypted content information, and
the encryption attribute header is set between the basic transport header and the encrypted content information, which is not subject to encryption, and outputted to the decrypting step (S909);
wherein the encryption attribute header is set between the basic transport header and the encrypted content information, and
the copy attribute information indicates copiability and the number of copies of the encrypted content information.

17. A computer-readable recording medium recording a program to be executed by a computer, the program performing distribution of encrypted content information, via a network in accordance with a prescribed transport protocol, to other end apparatus in a communication authenticated by an authentication process including at least one procedure of an authentication procedure and a key exchange procedure, having a module (302) for encrypting content information encoded by a prescribed encoding system, a module (303) for generating a transport header and performing transport protocol processing required to transfer the content information, and a module (309) for sending a packet to the authenticated end apparatus, **characterised in that** the module (303) comprises:
a module (304) for generating an encryption attribute header to be added to the content information, which includes copy attribute information necessitated for preventing unauthorised copying of the content information based on data sent from the module (302); and
a module (306) for generating a basic transport header to be added to the content information to which the encryption attributed header has been added,
wherein the sent packet includes the basic transport header, the encryption attribute header, and the encrypted content information to the other end authenticated apparatus,
and wherein the encryption attribute header is set between the basic transport header and the encrypted content information, and
the copy attribute information indicates copiability and the number of copies of the encrypted content information.

18. A computer-readable recording medium recording a program to be executed by a computer, the program performing receiving of encrypted content information, via a network in accordance with a prescribed transport protocol, by an authentication process including at least one procedure of an authentication procedure and a key exchange procedure, having a module (701) for receiving a packet from a sending apparatus, a module (703) for referring to a transport header and performing transport protocol processing required to receive the content information, and a module (707) for decrypting the content information encoded by a prescribed encoding system, **characterised in that** the module (703) comprises:
a module (703) for referring to an encryption attribute header added to the content information, which includes copy attribute information necessitated for preventing unauthorized copying of the content information and judging whether or not the content information is encrypted or whether there is a possibility that the content information is encrypted; and
a module (704) for referring to a basic transport header added to the content information to which the encryption attribute header has been added, wherein
the received packet includes the basic transport header, the encryption attribute header, and the encrypted content information, and the encryption attribute header is set between the basic transport header and the encrypted content information, and
the copy attribute information indicates copiability and the number of copies of the encrypted content information.

## Patentansprüche

1. Eine Content-Informationsverteileinrichtung zum Verteilen verschlüsselter Content-Information über ein Netz in Übereinstimmung mit einem vorbeschriebenen Protokoll zu einer Endeinrichtung in einer Kommunikation, die authentifiziert wird durch einen Authentifikationsprozess, der mindestens eine Prozedur einschließt von einer Authentifikationsprozedur und einer Schlüsselaustauschprozedur, wobei die Verteileinrichtung eine Einheit (302) zum Verschlüsseln von Content-Information hat, welche durch ein vorbeschriebenes Codiersystem codiert worden ist, eine Einheit (303) zum Erzeugen eines Tranpsort-Headers und zum Ausführen von Transportprotokollverarbeitung, die erforderlich ist zum Übertragen der Content-Information, und eine Einheit (309) zum Senden eines Pakets zu der authentifizierten Endeinrichtung, **dadurch gekennzeichnet, dass** die Erzeugungseinheit (303) umfasst:
eine Einheit (304) zum Erzeugen eines Verschlüsselungsattribut-Headers, der der verschlüsselten Content-Information hinzuzufügen ist, welche zum Verhindern nicht autorisierten Kopierens der Content-Information basierend auf von der Einheit (302) gesendeten Daten erforderliche Kopierattribut-Information einschließt; und
eine Einheit (306) zum Erzeugen eines Basistransport-Headers, der der Content-Information zu der der Verschlüsselungsattribut-Header hinzugefügt worden ist, hinzugefügt wird,
wobei das gesendete Paket den Basistransport-Header einschließt, den Verschlüsselungsattribut-Header und die verschlüsselte Content-Information, wobei der Verschlüsselungsattribut-Header zwischen dem Basistransport-Header und der verschlüsselten Content-Information eingesetzt wird, und
die Kopierattribut-Information eine Kopierbarkeit und die Anzahl von Kopien der verschlüsselten Content-Information anzeigt.

2. Einrichtung nach Anspruch 1, wobei der Verschlüsselungsattribut-Header mindestens eines einschließt von einem Indikator des Vorliegens oder Nicht-Vorliegens von Verschlüsselung der Content-Information, und einen Indikator des Verschlüsselungssystems der Content-Information.

3. Einrichtung nach Anspruch 1, wobei der Verschlüsselungsattribut-Header ein Kopierattributfeld mit einer Vielzahl von Bits in Bezug auf die Anzahl von Kopien der Content-Information einschließt.

4. Einrichtung nach Anspruch 1, wobei der Verschlüsselungsattribut-Header ein Zählerfeld einschließt, das eine Änderung in einem Verschlüsselungsschlüssel anzeigt.

5. Einrichtung nach Anspruch 1, wobei die Verschlüsselungsattribut-Header-Erzeugungseinheit (304) die Codier-Information, die das Codiersystem für die Content-Information anzeigt, in dem Ausdehnungstransport-Header oder in dem Nutzlast-Header festlegt.

6. Einrichtung nach Anspruch 1, wobei die Transport-Header-Erzeugungseinheit (306) ferner in den Basistransport-Header mindestens Information codiert, die anzeigt, dass es eine Möglichkeit gibt, dass die Content-Information verschlüsselt ist, und wobei die Verschlüsselungsattribut-Header-Erzeugungseinheit (304) mindestens Information in Bezug darauf codiert, ob die zu übertragende Content-Information verschlüsselt ist.

7. Einrichtung nach Anspruch 1, wobei die Verschlüsselungsattribut-Header-Erzeugungseinheit (304) Information in Bezug darauf, ob die zu übertragende Content-Information verschlüsselt ist, in die Erweiterungs-Header-Information codiert.

8. Einrichtung nach Anspruch 1, ferner umfassend:
eine Einheit (305) zum Erzeugen eines Content-Attribut-Headers, der Content-Attributinformation in Bezug auf eine Content-Information einschließt, und zum Senden dieses Content-Attribut-Headers in den Erweiterungstransport-Header oder in den Nutzlast-Header.

9. Einrichtung nach Anspruch 8, wobei der Content-Attribut-Header nicht verschlüsselt ist.

10. Einrichtung nach Anspruch 1, wobei die Verschlüsselungseinheit (302) einen Verschlüsselungsschlüssel basierend auf einem Identifizierer erzeugt, der ein von der Endeinrichtung in einer Kommunikation gesendetes Speichermedium einzigartig identifiziert.

11. Content-Informationsempfangseinrichtung, eingerichtet, um durch einen Authentifikationsprozess authentifiziert zu werden, der mindestens eine Prozedur einschließt von einer Authentifikationsprozedur und einer Schlüsselaustauschprozedur, und der bei Benutzung verschlüsselte Content-Information über ein Netz in Übereinstimmung mit einem vorbeschriebenen Transportprotokoll empfängt, wobei die Empfangseinrichtung eine Einheit (701) hat zum Empfangen eines Pakets von einer Sendeeinrichtung, eine Einheit (703) zum Bezugnehmen auf einen Transport-Header und Ausführen einer Transportprotokollverarbeitung, die erforderlich ist zum Empfangen der Content-Information, und eine Einheit (707) zum Entschlüsseln der durch ein vorgeschriebenes Codiersystem-verschlüsselten Content-Information, **dadurch gekennzeichnet, dass** die Bezugnahme- und Durchführungseinheit (703) umfasst:
eine Einheit (706) zum Bezugnehmen auf einen der Content-Information hinzugefügten Verschlüsselungsattribut-Header, der Kopierattributinformation einschließt, die erforderlich ist zum Verhindern unautorisierten Kopierens der Content-Information und zum Beurteilen, ob die Content-Information verschlüsselt ist oder ob eine Möglichkeit besteht, dass die Content-Information verschlüsselt ist; und
eine Einheit (704), um Bezug zu nehmen auf einen Basistransport-Header, der der Content-Information, zu der der Verschlüsselungsattribut-Header hinzugefügt worden ist, hinzugefügt worden ist,
wobei das empfangene Paket den Basistransport-Header einschließt, den Verschlüsselungsattribut-Header und die verschlüsselte Content-Information, und
der Verschlüsselungsattribut-Header zwischen dem Basistransport-Header und der verschlüsselten Content-Information eingesetzt wird, und
die Kopierattribut-Information Kopierbarkeit und die Anzahl von Kopien der verschlüsselten Content-Information anzeigt.

12. Einrichtung nach Anspruch 11, wobei die Bezugnahmeeinheit (706), wenn die Möglichkeit besteht, dass die Content-Information verschlüsselt ist, Bezug nimmt auf den Verschlüsselungsattribut-Header und beurteilt, ob die Content-Information verschlüsselt ist oder nicht.

13. Einrichtung nach Anspruch 11, wobei die Bezugnahmeeinheit (706) Bezug nimmt auf den Basistransport-Header oder auf den Verschlüsselungsattribut-Header, um eine Beurteilung in Bezug auf das Codiersystem der Content-Information zu treffen.

14. Einrichtung nach Anspruch 11, ferner umfassend:
eine Einheit (709, 710) zum Bezugnehmen auf einen empfangenen Basistransport-Header und um, wenn eine vorbeschriebene Verzögerungszeit abgelaufen ist oder eine vorgeschriebene Anzahl von Paketen verworfen worden sind, anzufordern, dass die Sendeeihrichtung einen vorbeschriebenen Verschlüsselungsparameter sendet.

15. Verfahren des Verteilens verschlüsselter Content-Information über ein Netz in Übereinstimmung mit einem vorbeschriebenen Transportprotokoll zu einer anderen Endeinrichtung in einer durch einen mindestens eine Prozedur von einer Authentifikationsprozedur und einer Schlüsselaustauschprozedur einschließenden Authentifikationsprozess authentifizierten Kommunikation, mit den Schritten des Verschlüsselns von durch ein vorbeschriebenes Codiersystem codierter Content-Information (S401), Erzeugen eines Transport-Headers und Durchführen einer für die Übertragung der Content-Information erforderlichen Transportprotokollverarbeitung (S403, S405), und Senden eines Pakets zu der authentifizierten Endeinrichtung (S409), **dadurch gekennzeichnet, dass** der Ausführungsschritt umfasst:
das Erzeugen eines der verschlüsselten Content-Information hinzuzufügenden Verschlüsselungsattribut-Headers, welcher eine Kopierattribut-Information einschließt, die erforderlich ist, um nicht-autorisierten Kopierens der Content-Information (S403) zu verhindern basierend auf von dem Verschlüsselungsschritt gesendeten Daten (S401); und
Erzeugen eines Basistransport-Headers, der der Content-Information hinzuzufügen ist, zu welcher der Verschlüsselungsattribut-Header hinzugefügt worden ist (S407),
wobei das gesendete Paket den Basistransport-Header einschließt, den Verschlüsselungsattribut-Header, den Content-Attribut-Header und die verschlüsselte Content-Information (S409), und
wobei der Verschlüsselungsattribut-Header zwischen dem Basistransport-Header und der verschlüsselten Content-Information eingesetzt ist und
die Kopierattributinformation Kopierbarkeit und die Anzahl der Kopien der verschlüsselten Content-Information anzeigt.

16. Verfahren des Empfangens verschlüsselter Content-Information über ein Netz in Übereinstimmung mit einem vorbeschriebenen Transportprotokoll durch einen Authentifikationsprozess, der mindestens eine Prozedur einschließt von einer Authentifizierungsprozedur und einer Schlüsselaustauschprozedur, mit den Schritten des Empfangens eines Paketes von einer Sendeeinrichtung (S901), des Bezugnehmens auf einen Transport-Header, und des Ausführens von Transportprotokollverarbeitung, die zum Empfangen der Content-Information erforderlich ist (S903, S907), und Entschlüsseln der Content-Information, die durch ein vorbeschriebenes Codiersystem codiert ist (S909), **dadurch gekennzeichnet, dass** der Bezugnahmeschritt umfasst:
Bezug nehmend auf einen zu der Content-Information hinzugefügten Transport-Header (S903); und
Bezugnehmen auf einen zu der Content-Information hinzugefügten Verschlüsselungsattribut-Header, welcher Kopierattributinformation einschließt, die erforderlich ist zum Verhindern nicht-autorisierten Kopierens der Content-Information, und Beurteilen, ob oder nicht die Content-Information verschlüsselt ist oder die Möglichkeit besteht, dass die Content-Information verschlüsselt ist (S907),
wobei das empfangene Paket den Basistransport-Header einschließt, den Verschlüsselungsattribut-Header und die verschlüsselte Content-Information, und
der Verschlüsselungsattribut-Header zwischen dem Basistransport-Header und der verschlüsselten Content-Information eingesetzt wird, welche nicht der Verschlüsselung unterzogen ist, und ausgegeben wird zu dem Entschlüsselungsschritt (S909);
wobei der Verschlüsselungsattribut-Header zwischen dem Basistransport-Header und der verschlüsselten Content-Information eingesetzt wird, und
die Kopierattributinformation Kopierbarkeit anzeigt und die Anzahl von Kopien der verschlüsselten Content-Information.

17. Computer-lesbares Aufzeichnungsmedium, ein durch einen Computer auszuführendes Programm aufzeichnend, wobei das Programm das Verteilen von verschlüsselter Content-Information über ein Netz in Übereinstimmung mit einem vorbeschriebenen Transportprotokoll zu einer anderen Endeinrichtung in einer Kommunikation vornimmt, die durch einen Authentifikationsprozess authentifiziert wird, der mindestens eine Prozedur einschließt von einer Authentifikationsprozedur und einer Schlüsselaustauschprozedur, mit einem Modul (302) zum Verschlüsseln von Content-Information, die durch ein vorbeschriebenes Codiersystem codiert ist, einem Modul (303) zum Erzeugen eines Transport-Headers und zum Ausführen von Transportprotokollverarbeitung, die für die Übertragung der Content-Information erforderlich ist, und einem Moduls (309) für das Senden eines Paketes zu der authentifizierten Endeinrichtung, **dadurch gekennzeichnet, dass** das Modul (303) umfasst:
ein Modul (304) zum Erzeugen eines Verschlüsselungsattribut-Headers, der zu der Content-Information hinzuzufügen ist, die Kopierattributinformation einschließt, die erforderlich ist für das Verhindern nicht-autorisierten Kopierens der Content-Information basierend auf Daten, die von dem Modul (302) gesendet worden sind; und
ein Modul (306) zum Erzeugen eines Basistransport-Headers, der zu der Content-Information hinzuzufügen ist, zu der der Verschlüsselungsattribut-Header hinzugefügt worden ist,
wobei das gesendete Paket den Basistransport-Header einschließt, den Verschlüsselungsattribut-Header und die verschlüsselte Content-Information zu der anderen authentifizierten Endeinrichtung,
und wobei der Verschlüsselungsattribut-Header zwischen dem Basistransport-Header und der verschlüsselten Content-Information eingesetzt ist, und
die Kopierattributinformation Kopierbarkeit und die Anzahl von Kopien der verschlüsselten Content-Information anzeigt.

18. Computer-lesbares Aufzeichnungsmedium, ein durch einen Computer auszuführendes Programm aufzeichnend, wobei das Programm das Empfangen von verschlüsselter Content-Information über ein Netz in Übereinstimmung mit einem vorbeschriebenen Transportprotokoll durch einen Authentifikationsprozess vornimmt, der mindestens eine Prozedur einschließt von einer Authentifizierungsprozedur und einer Schlüsselaustauschprozedur, mit einem Modul (701) zum Empfangen eines Pakets von einer Sendeeinrichtung, einem Modul (703) zum Bezugnehmen auf einen Transport-Header und Ausführen einer zum Empfangen der Content-Information erforderlichen Transportprotokollverarbeitung, und einem Modul (707) zum Entschlüsseln der durch ein vorbeschriebenes Codiersystem codierten Content-Information, **dadurch gekennzeichnet, dass** das Modul (703) umfasst:
ein Modul (703) zum Bezugnehmen auf einen Verschlüsselungsattribut-Header, der der Content-Information hinzugefügt worden ist, welche Kopierattributinformation einschließt, die erforderlich ist zum Verhindern nicht-autorisierten Kopierens der Content-Information und zum Beurteilen, ob oder nicht die Content-Information verschlüsselt ist oder ob die Möglichkeit besteht, dass die Content-Information verschlüsselt ist; und
ein Modul (704) zum Bezugnehmen auf einen Basistransport-Header, der der Content-Information hinzugefügt worden ist, zu der der Verschlüsselungsattribut-Header hinzugefügt worden ist, wobei
das empfangene Paket den Basistransport-Header einschließt, den Verschlüsselungsattribut-Header und die verschlüsselte Content-Information, und der Verschlüsselungsattribut-Header zwischen dem Basistransport-Header und der verschlüsselten Content-Information eingesetzt ist, und
die Kopierinformation Kopierbarkeit und die Anzahl von Kopien der verschlüsselten Content-Information anzeigt.

## Revendications

1. Appareil de distribution d'information de contenu pour distribuer une information de contenu chiffrée, via un réseau conformément à un protocole de transport prescrit, à un appareil d'extrémité dans une communication authentifiée par un processus d'authentification incluant au moins une procédure entre une procédure d'authentification et une procédure d'échange de clé, l'appareil de distribution ayant une unité (302) pour chiffrer une information de contenu codée par un système de codage prescrit, une unité (303) pour générer un en-tête de transport et effectuer un traitement de protocole de transport requis pour transférer l'information de contenu, et une unité (309) pour envoyer un paquet à l'appareil d'extrémité authentifié, **caractérisé en ce que** l'unité de génération (303) comprend :
une unité (304) pour générer un en-tête d'attribut de chiffrement devant être ajouté à l'information de contenu chiffrée, qui inclut une information d'attribut de copie nécessaire pour empêcher la copie non autorisée de l'information de contenu sur la base de données envoyées depuis l'unité (302) ; et
une unité (306) pour générer un en-tête de transport de base devant être ajouté à l'information de contenu à laquelle l'en-tête d'attribut de chiffrement a été ajouté,
dans lequel le paquet envoyé inclut l'en-tête de transport de base, l'en-tête d'attribut de chiffrement, et l'information de contenu chiffrée, dans lequel l'en-tête d'attribut de chiffrement est établi entre l'en-tête de transport de base et l'information de contenu chiffrée, et
l'information d'attribut de copie indique la copiabilité et le nombre de copies de l'information de contenu chiffrée.

2. Appareil selon la revendication 1, dans lequel l'en-tête d'attribut de chiffrement inclut au moins un d'un indicateur de l'existence ou non-existence de chiffrement de l'information de contenu et d'un indicateur du système de chiffrement de l'information de contenu.

3. Appareil selon la revendication 1, dans lequel l'en-tête d'attribut de chiffrement inclut un champ d'attribut de copie ayant une pluralité de bits en ce qui concerne le nombre de copies de l'information de contenu.

4. Appareil selon la revendication 1, dans lequel l'en-tête d'attribut de chiffrement inclut un champ de compteur indiquant un changement d'une clé de chiffrement.

5. Appareil selon la revendication 1, dans lequel l'unité de génération d'en-tête d'attribut de chiffrement (304) établit l'information de codage, qui indique le système de codage pour l'information de contenu, dans l'en-tête de transport d'expansion ou dans l'en-tête de charge utile.

6. Appareil selon la revendication 1, dans lequel l'unité de génération d'en-tête de transport (306) code en outre dans l'en-tête de transport de base au moins une information indiquant qu'il y a une possibilité que l'information de contenu soit chiffrée, et dans lequel l'unité de génération d'en-tête d'attribut de chiffrement (304) code dans l'en-tête d'expansion au moins une information quant à si l'information de contenu devant être transférée est chiffrée ou non.

7. Appareil selon la revendication 1, dans lequel l'unité de génération d'en-tête d'attribut de chiffrement (304) code dans l'en-tête d'expansion une information quant à si l'information de contenu devant être transférée est chiffrée ou non.

8. Appareil selon la revendication 1, comprenant en outre :
une unité (305) pour générer un en-tête d'attribut de contenu qui inclut une information d'attribut de contenu en ce qui concerne une information de contenu, et pour établir cet en-tête d'attribut de contenu dans l'en-tête de transport d'expansion ou dans l'en-tête de charge utile.

9. Appareil selon la revendication 8, dans lequel l'en-tête d'attribut de contenu n'est pas chiffré.

10. Appareil selon la revendication 1, dans lequel l'unité de chiffrement (302) génère la clé de chiffrement sur la base d'un identifiant qui identifie de manière unique un support de stockage envoyé depuis l'appareil d'extrémité dans une communication.

11. Appareil de réception d'information de contenu disposé pour être authentifié par un processus d'authentification incluant au moins une procédure entre une procédure d'authentification et une procédure d'échange de clé et qui, en utilisation reçoit une information de contenu chiffrée via un réseau conformément à un protocole de transport prescrit, l'appareil de réception ayant une unité (701) pour recevoir un paquet d'un appareil d'envoi, une unité (703) pour se référer à un en-tête de transport et effectuer un traitement de protocole de transport requis pour recevoir l'information de contenu, et une unité (707) pour déchiffrer l'information de contenu codée par un système de codage prescrit, **caractérisé en ce que** l'unité de référence et d'exécution (703) comprend :
une unité (706) pour se référer à un en-tête d'attribut de chiffrement ajouté à l'information de contenu, qui inclut une information d'attribut de copie nécessaire pour empêcher la copie non autorisée de l'information de contenu et juger si l'information de contenu est chiffrée ou non ou s'il y a une possibilité que l'information de contenu soit chiffrée ; et
une unité (704) pour se référer à un en-tête de transport de base ajouté à l'information de contenu à laquelle l'en-tête d'attribut de chiffrement a été ajouté,
dans lequel le paquet reçu inclut l'en-tête de transport de base, l'en-tête d'attribut de chiffrement, et l'information de contenu chiffrée, et
l'en-tête d'attribut de chiffrement est établi entre l'en-tête de transport de base et l'information de contenu chiffrée, et
l'information d'attribut de copie indique la copiabilité et le nombre de copies de l'information de contenu chiffrée.

12. Appareil selon la revendication 11, dans lequel l'unité de référence (706), lorsqu'il y a une possibilité que l'information de contenu soit chiffrée, se réfère à l'en-tête d'attribut de chiffrement et juge si l'information de contenu est chiffrée ou non.

13. Appareil selon la revendication 11, dans lequel l'unité de référence (706) se réfère à l'en-tête de transport de base ou à l'en-tête d'attribut de chiffrement pour effectuer un jugement quant au système de codage de l'information de contenu.

14. Appareil selon la revendication 11, comprenant en outre :
une unité (709, 710) pour se référer à un en-tête de transport de base reçu et, lorsqu'un délai d'attente prescrit s'est écoulé ou qu'un nombre prescrit de paquets ont été supprimés, pour demander que l'appareil d'envoi envoie un paramètre de chiffrement prescrit.

15. Procédé de distribution d'information de contenu chiffrée, via un réseau conformément à un protocole de transport prescrit, à un appareil de l'autre extrémité dans une communication authentifiée par un processus d'authentification incluant au moins une procédure entre une procédure d'authentification et une procédure d'échange de clé, ayant les étapes consistant à chiffrer une information de contenu codée par un système de codage prescrit (S401), générer un en-tête de transport et effectuer un traitement de protocole de transport requis pour transférer l'information de contenu (S403, S405), et envoyer un paquet à l'appareil d'extrémité authentifié (S409), **caractérisé en ce que** l'étape d'exécution comprend :
la génération d'un en-tête d'attribut de chiffrement devant être ajouté à l'information de contenu chiffrée, qui inclut une information d'attribut de copie nécessaire pour empêcher la copie non autorisée de l'information de contenu (S403), sur la base de données envoyées depuis l'étape de chiffrement (S401) ; et
la génération d'un en-tête de transport de base devant être ajouté à l'information de contenu à laquelle l'en-tête d'attribut de chiffrement a été ajouté (S407),
dans lequel le paquet envoyé inclut l'en-tête de transport de base, l'en-tête d'attribut de chiffrement, l'en-tête d'attribut de contenu et l'information de contenu chiffrée (S409), et
dans lequel l'en-tête d'attribut de chiffrement est établi entre l'en-tête de transport de base et l'information de contenu chiffrée, et
l'information d'attribut de copie indique la copiabilité et le nombre de copies de l'information de contenu chiffrée.

16. Procédé de réception d'information de contenu chiffrée, via un réseau conformément à un protocole de transport prescrit, par un processus d'authentification incluant au moins une procédure entre une procédure d'authentification et une procédure d'échange de clé, ayant les étapes consistant à recevoir un paquet d'un appareil d'envoi (S901), se référer à un en-tête de transport et effectuer un traitement de protocole de transport requis pour recevoir l'information de contenu (S903, S907), et déchiffrer l'information de contenu codée par un système de codage prescrit (S909), **caractérisé en ce que** l'étape de référence comprend :
la référence à un en-tête de transport de base ajouté à l'information de contenu (S903) ; et
la référence à un en-tête d'attribut de chiffrement ajouté à l'information de contenu, qui inclut une information d'attribut de copie nécessaire pour empêcher la copie non autorisée de l'information de contenu et juger si l'information de contenu est chiffrée ou non ou s'il y a une possibilité que l'information de contenu soit chiffrée (S907),
dans lequel le paquet reçu inclut l'en-tête de transport de base, l'en-tête d'attribut de chiffrement, et l'information de contenu chiffrée, et
l'en-tête d'attribut de chiffrement est établi entre l'en-tête de transport de base et l'information de contenu chiffrée, qui n'est pas sujette au chiffrement, et sortie à l'étape de déchiffrement (S909) ;
dans lequel l'en-tête d'attribut de chiffrement est établi entre l'en-tête de transport de base et l'information de contenu chiffrée, et
l'information d'attribut de copie indique la copiabilité et le nombre de copies de l'information de contenu chiffrée.

17. Support d'enregistrement lisible par ordinateur enregistrant un programme devant être exécuté par un ordinateur, le programme effectuant la distribution d'information de contenu chiffrée, via un réseau conformément à un protocole de transport prescrit, à un appareil de l'autre extrémité dans une communication authentifiée par un processus d'authentification incluant au moins une procédure entre une procédure d'authentification et une procédure d'échange de clé, ayant un module (302) pour chiffrer une information de contenu codée par un système de codage prescrit, un module (303) pour générer un en-tête de transport et effectuer un traitement de protocole de transport requis pour transférer l'information de contenu, et un module (309) pour envoyer un paquet à l'appareil d'extrémité authentifié, **caractérisé en ce que** le module (303) comprend :
un module (304) pour générer un en-tête d'attribut de chiffrement devant être ajouté à l'information de contenu, qui inclut une information d'attribut de copie nécessaire pour empêcher la copie non autorisée de l'information de contenu sur la base de données envoyées depuis le module (302) ; et
un module (306) pour générer un en-tête de transport de base devant être ajouté à l'information de contenu à laquelle l'en-tête d'attribut de chiffrement a été ajouté,
dans lequel le paquet envoyé inclut l'en-tête de transport de base, l'en-tête d'attribut de chiffrement, et l'information de contenu chiffrée à l'appareil authentifié de l'autre extrémité,
et dans lequel l'en-tête d'attribut de chiffrement est établi entre l'en-tête de transport de base et l'information de contenu chiffrée, et
l'information d'attribut de copie indique la copiabilité et le nombre de copies de l'information de contenu chiffrée.

18. Support d'enregistrement lisible par ordinateur enregistrant un programme devant être exécuté par un ordinateur, le programme effectuant la réception d'information de contenu chiffrée, via un réseau conformément à un protocole de transport prescrit, par un processus d'authentification incluant au moins une procédure entre une procédure d'authentification et une procédure d'échange de clé, ayant un module (701) pour recevoir un paquet d'un appareil d'envoi, un module (703) pour se référer à un en-tête de transport et effectuer un traitement de protocole de transport requis pour recevoir l'information de contenu, et un module (707) pour déchiffrer l'information de contenu codée par un système de codage prescrit, **caractérisé en ce que** le module (703) comprend :
un module (703) pour se référer à un en-tête d'attribut de chiffrement ajouté à l'information de contenu, qui inclut une information d'attribut de copie nécessaire pour empêcher la copie non autorisée de l'information de contenu et juger si l'information de contenu est chiffrée ou non ou s'il y a une possibilité que l'information de contenu soit chiffrée ; et
un module (704) pour se référer à un en-tête de transport de base ajouté à l'information de contenu à laquelle l'en-tête d'attribut de chiffrement a été ajouté, dans lequel
le paquet reçu inclut l'en-tête de transport de base, l'en-tête d'attribut de chiffrement, et l'information de contenu chiffrée, et l'en-tête d'attribut de chiffrement est établi entre l'en-tête de transport de base et l'information de contenu chiffrée, et
l'information d'attribut de copie indique la copiabilité et le nombre de copies de l'information de contenu chiffrée.
